(19) Europäisches Patentamt
European Patent Office
Office européen des brevets

(11) **EP 2 644 313 B1**

(12) **EUROPEAN PATENT SPECIFICATION**

(45) Date of publication and mention
of the grant of the patent:
**09.03.2016 Bulletin 2016/10**

(21) Application number: **12858684.9**

(22) Date of filing: **10.05.2012**

(51) Int Cl.:
**B23K 35/26** *(2006.01)*     **C22C 13/00** *(2006.01)*

(86) International application number:
**PCT/JP2012/062009**

(87) International publication number:
**WO 2013/108421 (25.07.2013 Gazette 2013/30)**

(54) **SOLDER ALLOY FOR ACOUSTIC DEVICE**

LÖTLEGIERUNG FÜR EINE AKUSTISCHE VORRICHTUNG

ALLIAGE DE BRASAGE POUR DISPOSITIF ACOUSTIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**02.10.2013 Bulletin 2013/40**

(73) Proprietor: **SENJU METAL INDUSTRY CO., LTD.
Tokyo, 120-8555 (JP)**

(72) Inventors:
• **AKAGI, Ippei**
**Tokyo 100-8310 (JP)**
• **TOKIMOTO, Hideki**
**Tokyo 100-8310 (JP)**
• **SUZUKI, Seiki**
**Tokyo 100-8310 (JP)**
• **SEINO, Masahumi**
**Tokyo 120-8555 (JP)**
• **OSAWA, Isamu**
**Tokyo 120-8555 (JP)**
• **UESHIMA, Minoru**
**Tokyo 120-8555 (JP)**

(74) Representative: **D Young & Co LLP
120 Holborn
London EC1N 2DY (GB)**

(56) References cited:
**WO-A1-2006/129713     JP-A- H11 277 290
JP-A- 2000 173 253      JP-A- 2000 173 253
JP-A- 2001 001 180      JP-A- 2001 001 180
JP-A- 2002 096 191      JP-A- 2003 230 980
JP-A- 2005 103 645      JP-A- 2005 103 645
US-A1- 2003 015 575**

**Description**

**TECHNICAL FIELD**

The present invention relates to audio solder alloy that is applicable to joining solder for connecting electronics parts on a printed circuit board which is used for an audio system or the like.

**BACKGROUND**

In order to improve sound quality in sound-reproducing system (audio products) as audio system, it is not only required to select electronics parts to be used in the sound-reproducing system but also to collectively study circuit design in the printed circuit board used for an amplifier constituting this sound-reproducing system, an arrangement of parts in the printed circuit board, quality of connecting wire to be used for the connecting wire (oxygen free copper etc.) between a final (output) amplifier and a speaker and the like.

Among them, the selection of electronics parts and the circuit design when using the printed circuit board have been already executed as an improvement for sound quality but in order to further improve sound quality and to provide a sound-reproducing system with high auditory sensation assessment, solder for joining the electronics parts has been noticed.

As the solder for joining the electronics parts, the (Patent Document 1) through (Patent Document 4) and the like have been known.

**DOCUMENTS FOR PRIOR ART**

**PATENT DOCUMENTS**

Patent Document 1: Japanese Patent Application Publication No. H11-277290
Patent Document 2: Japanese Patent Application Publication No.2002-239780
Patent Document 3: Japanese Patent Application Publication No. 2003-230980

The Patent Document 1 relates to quaternary solder alloy in which Ni is added to (Sn· Ag· Cu), which improves any resistance to thermal shock. The Patent Document 2 relates to solder alloy to pursuit joining reliability and the like and the Patent Document 3 is an invention relating to solder alloy to improve joining reliability.

JP 2005-103645 discloses a solder comprising Sn, Ag, and Cu with certain combinations of Ge, Ni, P, Mn, Au, Pd, Pt, S, Bi, Sb and In each in the range of 0.006-0.1 % by mass.

**SUMMARY OF THE INVENTION**

**PROBLEMS TO BE SOLVED BY THE INVENTION**

However, the above-mentioned Patent Documents 1 through 3 do not disclose that a composition of solder alloy for joining electronics parts and contained amounts thereof exert an influence on sound quality, auditory sensation assessment and the like.

Inventors of this application confirmed on the basis of various kinds of examinations that, by changing the metal composition of solder alloy and/or the contained amounts thereof, sound quality and/or auditory sensation were changed. In other words, it was understood that combination of the composition of solder alloy for joining electronics parts and contained amounts thereof were an important primary factor to improve sound quality and to acquire high auditory sensation assessment.

Accordingly, the present invention solves such a conventional problem and its object is to provide audio solder alloy that is applicable to audio system or the like which allows sound quality to be improved and allows high audio sensation assessment to be acquired.

**MEANS FOR SOLVING THE PROBLEMS**

In order to solve the problem, audio solder alloy according to the invention contains Ag of 0.8 through 1.20 % by mass, Cu of 0.65 through 0.75 % by mass, In of 0.002 through 0.004 % by mass, Ni of 0.01 through 0.02 % by mass, Pb of greater than 0% and not greater than 0.005 % by mass and the remainder of Sn.

Selecting such composition elements and their contained amounts enables to be acquired audio solder alloy with high sound quality and high auditory assessment value.

## EFFECTS OF THE INVENTION

According to the invention, senary solder alloy is configured in which (tin, Sn, argent, Ag and copper, Cu) are principle ingredients and indium, In, nickel, Ni and lead, Pb, in minuscule quantities, are added thereto, and their contained amounts are set to their appropriate values so that it is possible to accomplish audio solder alloy with high sound quality and high auditory assessment.

## BRIEF DESCRIPTION OF THE DRAWINGS

[Figure 1] is a block diagram showing an example of an auditory assessment device which is presented to the subject invention.

[Figure 2] is a circuit diagram of a low pass filter circuit showing an example of a filter circuit used in the auditory assessment device shown in FIG. 1.

[Figure 3] is a diagram showing an arrangement of parts on a printed circuit board of the low pass filter circuit.

[Figure 4] is a circuit diagram of a high pass filter circuit showing an example of the filter circuit used in the auditory assessment device shown in FIG. 1.

[Figure 5] is a diagram showing an arrangement of parts on a printed circuit board of the high pass filter circuit.

## EMBODIMENT FOR IMPLEMENTING THE INVENTION

## EMBODIMENT

Next, a case where an example of audio solder alloy according to the invention is applied to joining solder for jointing electronics parts which are used for a circuit system constituting the above-mentioned audio system will be described more in detail referring to drawings and the like.

As the joining solder which could exert any influence on any sound quality and/or auditory assessment, pieces of audio solder alloy which were presented to the auditory assessment were prepared.

(1) Auditory Audio Solder Alloys:

As the joining solder for joining the electronics parts, ternary flux cored solder alloy (solder alloy made of tin, Sn, argent, Ag and copper, Cu), which is the most widely used as the joining solder for joining the electronics parts, is basically used.

It was confirmed by auditory tests that some metals, in minuscule quantities, were added to this ternary solder alloy to change auditory assessment so that species of the following metal were selected as trace metals based on various kinds of repeated auditory tests.

(Added Metals)

[Indium, In; Nickel, Ni; antimony, Sb; Bismuth, Bi; Iron, Fe; Arsenic, As; and Lead, Pb]

Since lead, Pb is a trace element contained in tin, Sn constituting the ternary solder alloy, the auditory assessment was actually carried out on the senary solder alloy in which the above-mentioned trace metals were added to the quaternary solder alloy of (tin, Sn, argent, Ag and copper, Cu) and lead, Pb.

(2) Numbers of Prepared Joining Audio Solder Alloys:

As the metals, to be added, two species of metals were selected other than lead, Pb, and their amounts of addition and the amounts of addition of other quaternary metal were regulated so that the audio solder alloys were made.

Nine species of audio solder alloys which had the same metal composition as each other and contained different amounts of addition thereof were actually prepared for auditory.

(3) Auditory Equipment (Auditory Assessment Device)

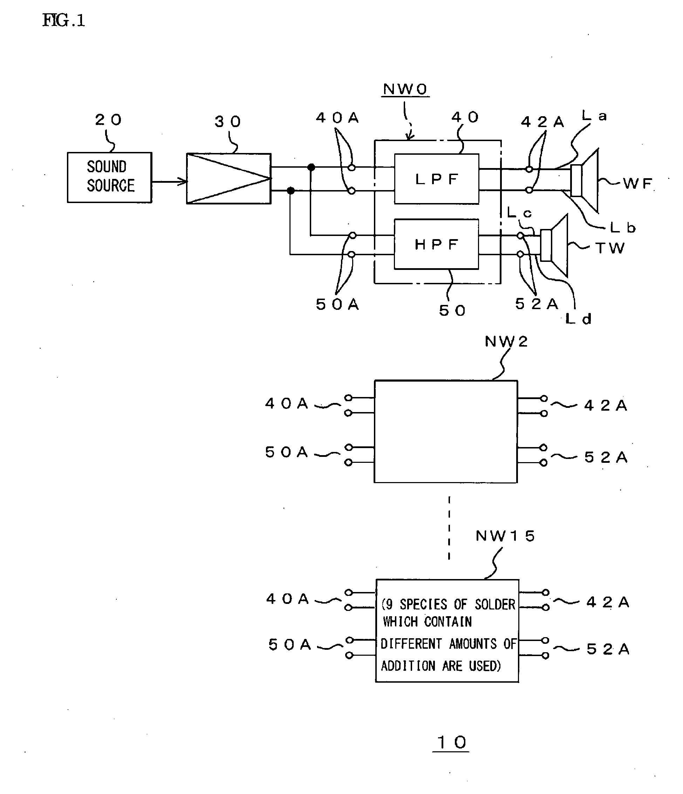

FIG. 1 shows an example of an auditory assessment device 10. As an electronic circuit for auditory assessment, filter circuits NW each constituting the electronic circuit by soldering discrete parts on the printed circuit board (circuit board) are illustrated.

Since any stereophonic recording is generally performed on sound source, reproducing equipment is constituted of a pair of right and left speakers, which will be described by using only a single side one.

Further, if CD (compact disk) is sound source, any sound source reproducing apparatus such as CD player having a rotation system reproduces the sound source to listen to it when reproducing the sound source. However, any uneven rotation, eccentricity or the like may generate in the rotation when reproducing the CD sound source so that there is possibility such that any influence thereof is exerted over different portions every auditory tests, which impedes any appropriate auditory assessment. Thus, in this moment, when reproducing the sound source for the auditory tests, any sound source reproducing apparatus such as CD player having a rotation system was not directly used. In the other words, when CD was sound source, the CD player reproduced CD and any semiconductor memory such as USB memory temporarily stored it to be used as sound source so that the sound source could be reproduced under the same condition.

An audio signal from the sound source 20 is supplied to a filter circuit NW through an output amplifier 30 and is divided into two ways, middle/low range and high range, in this example. Accordingly, this filter circuit NW (NW0) is constituted of a low pass filter (LPF) 40 and a high pass filter (HPF) 50, both circuits of which are constituted using printed circuit boards (circuit boards).

An output signal from the low pass filter 40 is supplied to a speaker for middle/low range (woofer) WF through connection lines La, Lb. Similarly, an output signal from the high pass filter 50 is supplied to a speaker for high range (tweeter) TW through connection lines Lc, Ld.

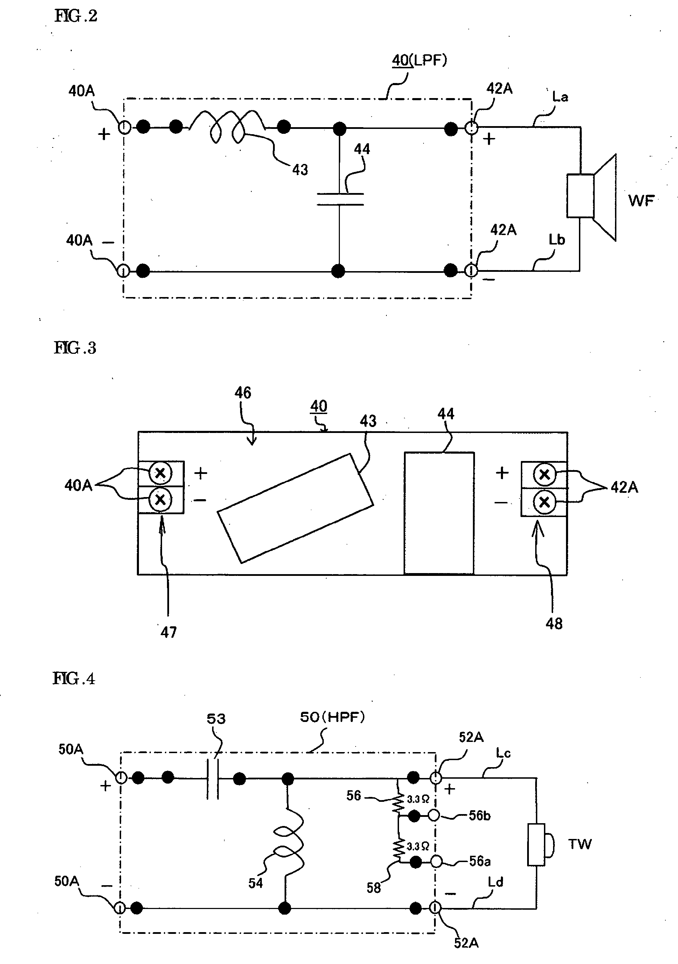

FIG. 2 shows an example of the low pass filter 40 which is constituted of a parallel circuit of an iron-core coil 43 and a capacitor 44. As the iron-core coil 43, a coil having a diameter of 1.2 mmØ is used in this example. The coil having inductance value of 0.45mH is used. The capacitor 44 having a withstand voltage of 250 V (DC) and 12 μF is used.

This low pass filter 40 actually utilizes a printed circuit board 46, as shown in FIG. 3, on a surface of which the iron-core coil 43 and the capacitor 44 are arranged with them having a shown positional relationship. Screw terminals 47, 48 each containing two input terminals (40A, 40A) or two output terminals (42A, 42A), are provided on right and left both end sides of the printed circuit board 46.

As a result thereof, the output amplifier 30 is not soldered to the low pass filter 40 but is screwed thereon (or inserted thereto). The low pass filter 40 is also not soldered to the connection lines La, Lb which connect the speaker WF but is mechanically screwed thereon.

As a result thereof, the low pass filter 40 shown in FIG. 2 is configured so that the iron-core coil 43 and the capacitor 44 (both are electronics parts) are soldered on the printed circuit board 46 with a total of four points using solder (audio solder alloy), as shown as black dots in FIG. 2. Numbers of soldered points are counted including soldering on a lead line of the electronics parts. In fact, since two input terminal portions and two output terminal portions are respectively soldered on the printed circuit board (circuit board), a total of eight points are soldered in this embodiment.

The reason why the screw (insert) terminals 47, 48 are used as the terminals is because plural filter circuits NW, which will be described later, are easily exchanged to listen to and compare them.

FIG. 4 shows an example of the high pass filter 50 which is constituted of a parallel circuit of a capacitor 53 and an iron-core coil 54. The capacitor 53 having a withstand voltage of 250 V (DC) and 6.8 μF is used. As the iron-core coil 54, a coil having a diameter of 1.0 mmØ is used in this embodiment. The coil having inductance value of 0.4mH is used.

Terminals 52A and the speaker for high range reproduction TW are respectively connected by the connection lines Lc, Ld. A pair of attenuation resistances 56, 58 are connected in series between a side of the terminal 52A and a terminal 56a and a terminal 56b is led from a middle connection point thereof. The terminals 56a, 56b are used for attenuation of the output signal depending on the situation.

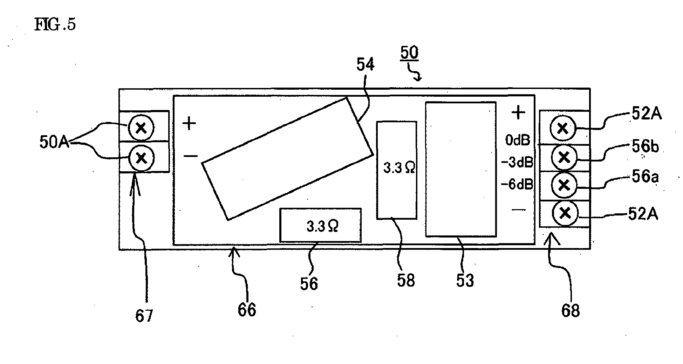

This high pass filter 50 also actually utilizes a printed circuit board 66, as shown in FIG. 5, on a surface of which the capacitor 53 and the iron-core coil 54 are arranged with them having a shown positional relationship. Screw terminals 67, 68 each having two input terminals (50A, 50A) or four output terminals (52A, 52A, 56a, 56b), are provided on right and left both end sides of the printed circuit board 66. As a result thereof, the output amplifier 30 is not soldered to the high pass filter 50 but is screwed thereon (or inserted thereto). The high pass filter 50 is also not soldered to the speaker TW, but is mechanically screwed on the connection lines Lc, Ld.

As a result thereof, the high pass filter 50 shown in FIG.4 is configured so that the capacitor 53 and the iron-core coil 54 (both are electronics parts) are soldered on the printed circuit board 66 with a total of four points using solder (audio solder alloy), as shown as black dots in FIG. 4. In fact, since two input terminal points and two output terminal points are respectively soldered on the printed circuit board (circuit board), a total of eight points are soldered in this embodiment

The reason why the screw (insert) terminals 67, 68 are used as the terminals is because plural filter circuits NW, which will be described later, are easily exchanged to listen to and compare them.

(4) Specification of Audio Solder Alloys to be used as Auditory Test

The audio solder alloy to be now used for auditory assessment contains metal (of Sn· Ag• Cu) (metal elements) as the base thereof and a trace of Pb, as described above, in addition to two optional species of elements among In, Ni, Sb, Bi, Fe and As as a trance of added metal.

In order to enhance auditory assessment accuracy and find out better audio solder alloy, in the following examples, four species of metal elements (of Sn•Ag•Cu•Pb) are selected as the base among the above-mentioned 10 species of metal (of Sn• Ag•Cu•Pb•In•Ni•Sb•Bi•Fe•As) and two species of metal are optionally extracted from the remaining (six species) of metal so that the audio solder alloy (senary solder alloy) is made of a set of six species of metals.

Further, even when they have the same composition metals, by changing their contained amounts (amounts of addition), a set of nine species of the audio solder alloys is prepared in this embodiment so that they are used as the joining solder for auditory assessment.

Further, a total of 15 species of the audio solder alloys in which a combination of the extracted composition metals were changed was prepared and the auditory assessment was carried out using filter circuits NW in which these audio solder alloys were used as the joining solder.

Therefore, as shown in FIG. 1, 15 species of the filter circuits NW0 through BW15are used as the auditory assessment device 10. The identical circuits and speakers are used as other circuits and speakers. Combinations of these filter circuits NW0 through BW15 and the extracted elements are shown in Table 1.

Metal elements (of Sn• Ag•Cu•Pb) to be commonly used in the audio solder alloy are shown out of the table.

[Table 1]

| GROUPS | FILTER CIRCUITS NW | ADDED ELEMENTS | | SPECIES OF SOLDER HAVING DIFFERENT AMOUNTS OF ADDITION | CORRESPONDING TABLES |
|---|---|---|---|---|---|
| 1 | NWO$_{1\sim9}$ | In ▪ Ni | | RESPECTIVE 9 SPECIES | TABLE 3~TABLE 5 |
| | NWO$_{3\sim8}$, NWO$_{10\sim12}$ | In ▪ Ni | | | TABLE 6~TABLE 8 |
| 2 | NW$_{1\sim9}$ | Bi | Sb | RESPECTIVE 9 SPECIES | TABLE 9~TABLE 11 |
| | NW3$_{1\sim9}$ | Fe | | | TABLE 12~TABLE 14 |
| | NW4$_{1\sim9}$ | As | | | TABLE 15~TABLE 17 |
| | NW5$_{1\sim9}$ | In | | | TABLE 18~TABLE 20 |
| | NW6$_{1\sim9}$ | Ni | | | TABLE 21~TABLE 23 |
| 3 | NW7$_{1\sim9}$ | Fe | Bi | RESPECTIVE 9 SPECIES | TABLE 24~TABLE 26 |
| | NW8$_{1\sim9}$ | As | | | TABLE 27~TABLE 29 |
| | NW9$_{1\sim9}$ | In | | | TABLE 30~TABLE 32 |
| | NW10$_{1\sim9}$ | Ni | | | TABLE 33~TABLE 35 |
| 4 | NW11$_{1\sim9}$ | As | Fe | RESPECTIVE 9 SPECIES | TABLE 36~TABLE 38 |
| | NW12$_{1\sim9}$ | In | | | TABLE 39~TABLE 41 |
| | NW13$_{1\sim9}$ | Ni | | | TABLE 42~TABLE 44 |
| 5 | NW1 4$_{1\sim9}$ | In | As | RESPECTIVE 9 SPECIES | TABLE 45~TABLE 47 |
| | NW15$_{1\sim9}$ | Ni | | | TABLE 48~TABLE 50 |
| (COMMON ELEMENTS:Sn, Ag, Cu and Pb) | | | | | |

(5) Optimal Audio Solder Alloys

As a result of the auditory assessment, senary solder alloy (of Sn• Ag•Cu•In•Ni•Pb) in which and a trace of lead, Pb, a trace of indium, In and a trace of nickel, Ni were added to (tin,Sn• argent, Ag•copper,Cu) and amounts of addition thereof were appropriately selected, had the highest auditory assessment value (the maximum value thereof is 5.0).

Specific examples thereof will be described later but it is necessary to verify whether or not the highest auditory assessment by listeners is the appropriate auditory assessment.

Higher auditory sensation assessment satisfied by improving sound quality is only assessments by the listeners so that even if assessing persons are audio specialists, variation in their assessment (auditory assessment values) arises. As one means (quantitative means) to verify whether or not the variation in their assessment was small, general sound sources, which were often used for auditory assessment, were first sampled. Items of auditory assessment were then set. Next, the auditory assessment was analyzed using multiple correlation model which utilized correlations between the auditory assessment value and the predictive (estimation or theoretical) value.

(6) Samples of Sound Sources and Items of Auditory Assessment

As the general sound sources, which were often used for auditory assessment, the following three pieces of music (on popular music, classic music and vocal) were referred. The sound source 20 in which CD had been reproduced and had been once stored was used.

(i) Vincent

(ii) Carmen ballet

(iii) Somewhere somebody

One example of items of the auditory assessment is shown in (Table 2). In this example, a total of 10 items of the auditory assessment from low range property to instrument property were performed on the basis of 5 points and their mean values were estimated as the auditory assessment values.

[Table 2]

| ITEMS OF ASSESSMENT | SONG TITLES | ASSESSMENT CONTENTS | AUDIO-VISUAL ASSESSMENT VALUE (MAXIMUM OF 5. 0) |
|---|---|---|---|
| ① LOW RANGE PROPERTY | vincent | Listen to balance of rich guitar body sound. | |
| | Carmen ballet | Listen to how scale is the importance of percussion system sounds. | |
| | somewhere somebody | Listen to volume of low pitch sound of the synthesizer. | |
| ② MIDDLE RANGE PROPERTY | vincent | Listen to enhanced balance of female vocal which occupies the majority of middle range. | |
| | Carmen ballet | Listen to unbalance of volume of wind instrument system. | |
| | somewhere somebody | Listen to whether or not male and female vocals are appropriate. | |
| ③ HIGH RANGE PROPERTY | vincent | Listen to whether or not harmonic overtones of the guitar can be extracted. | |
| | Carmen ballet | Listen to whether or not triangle's presence is properly strong. | |
| | somewhere somebody | Listen to which husky components are too much or less in the high range of voice components. | |

(continued)

| ITEMS OF ASSESSMENT | SONG TITLES | ASSESSMENT CONTENTS | AUDIO-VISUAL ASSESSMENT VALUE (MAXIMUM OF 5. 0) |
|---|---|---|---|
| ④ RENEWABILITY | vincent | Listen to whether or not the guitar sounds are clear. | |
| | Carmen ballet | Listen to whether the instruments sound vividly even when the recording is old. | |
| | somewhere somebody | Listen to clear voice. | |
| ⑤ DENSITY | vincent | Listen to whether or not recognition that there are many strings of the guitar can be given. | |
| | Carmen ballet | Listen to how many number of percussion systems can be listened. | |
| | somewhere somebody | Listen to whether instrument of each part has proper density. | |
| ⑥ AMOUNT OF INFORMATION | vincent | Listen to any tones in which strings of the guitar are rubbed or snapped, and a sound of which remains. | |
| | Carmen ballet | Distinguish live performance like sounds information. | |
| | somewhere somebody | Listen to breathing and tenderness touched a microphone. | |
| ⑦ S/N | vincent | Listen to whether or not voice is distorted because the voice is more strongly recorded. | |
| | Carmen ballet | Listen to whether each instrument weakly recorded is clearly heard over any noise of equipment and audience. | |
| | somewhere somebody | Listen to whether ot not base recorded low and richly causes upper range to be made unharmonious. | |
| ⑧ SOUND FIELD | vincent | Listen to voice depth and lip size. | |
| | Carmen ballet | Listen to positions of the instruments and an expanse and depth of space. | |
| | somewhere somebody | Listen to expanse feeling of voice and instrument and their feeling of depth. | |
| ⑨ VOCAL PROPERTY | vincent | Listen to smooth and vivid voice. | |
| | Carmen ballet | None | |
| | somewhere somebody | Listen to deep male voice and smooth and vivid female voice. | |
| ⑩ INSTRUMENT PROPERTY | vincent | Listen to whether or not it is a sound that is near living instrument sound. | |
| | Carmen ballet | Listen to whether ot not it is near a situation where instrument of live performance sounds in a hall. | |
| | somewhere somebody | Listen to reality and vividness of the peroussion system. | |
| | | | AUDIO VISUAL ASSESSMENT VALUE (MEAN VALUE) . |

(7) Analysis of Auditory Assessment

The analysis of auditory assessment is performed so that, as described above, the multiple correlation analysis is respectively performed on a set of audio solder alloy constituted of extracted senary composition alloy, each of which contains 9 species of audio solder alloy having different amounts of addition, and the same is also performed on 15 kinds of audio solder alloy constituted of different composition metals. The most multiple correlation of this multiple correlation analysis was estimated as the audio solder alloy of the highest auditory assessment (in this invention).

In the following examples, the multiple correlation analysis provided with Excel (registered trade mark) was used as an analysis tool. In this example, a main component made of (Sn•Ag•Cu) and plural species (therefore, three species) of metal elements to be added were respectively set as explanatory variables (independent variables) and it was verified with the explanatory variable being changed how much a multiple correlation equation (multiple correlation model) derived from the multiple correlation analysis reflected the auditory assessment values (measured values, namely, dependent variables(objective variables), maximum value of which is 5.0).

(8) Grouping of Audio Solder Alloys and Relation to Corresponding Tables of Multiple Correlation Analysis

When performing the multiple correlation analysis, the audio solder alloys are grouped into the ones shown in the (Table 1).

(A) Audio Solder Alloys of Group 1 according to the invention

The composition of the audio solder alloys of this group is [Audio solder alloys of group 1: (Sn•Ag•Cu•In•Ni•Pb)].

The corresponding tables indicating results of the multiple correlation analysis when using the audio solder alloys are shown as (Tables 3 through 5) and (Tables 6 through 8) among the combination examples of (Table 1). The (Tables 3 through 5) indicate results of the multiple correlation analysis of the audio solder alloys according to this invention.

It is to be noted that solder alloy shown in data 7 is a solder alloy which is a typical solder alloy as lead-free solder composed of almost (Sn·3AG•0.5Cu) so that the assessment has been performed on the basis of this solder alloy.

[Table 3]

|  | Y | Cu | Ag | In | Ni | Pb | NW |
|---|---|---|---|---|---|---|---|
| EXAMPLE 1 | 5.00 | 0.7200 | 1.0100 | 0.0030 | 0.0160 | 0.0035 | $NWO_1$ |
| EXAMPLE 2 | 5.00 | 0.7100 | 1.0000 | 0.0037 | 0.0170 | 0.0025 | $NWO_2$ |
|  |  |  |  |  |  |  |  |
| DATA 1 | 4.00 | 0.7000 | 3.4900 | 0.0000 | 0.0001 | 0.0042 | $NWO_3$ |
| DATA 2 | 4.15 | 1.9800 | 0.2700 | 0.0025 | 0.0007 | 0.0130 | $NWO_4$ |
| DATA 3 | 4.35 | 1.9700 | 0.2700 | 0.0029 | 0.0007 | 0.0130 | $NWO_5$ |
| DATA 4 | 4.18 | 1.6700 | 4.7000 | 0.0000 | 0.0001 | 0.0002 | $NWO_6$ |
| DATA 5 | 3.83 | 0.8800 | 3.9800 | 0.0022 | 0.0077 | 0.0290 | $NWO_7$ |
| DATA 6 | 3.68 | 0.5200 | 2.9900 | 0.0023 | 0.0022 | 0.0250 | $NWO_8$ |
| DATA 7 | 3.00 | 0.5800 | 2.9900 | 0.0010 | 0.0057 | 0.0280 | $NWO_9$ |
| Y = AUDITORY ASSESSMENT VALUE | | | | | | | |

In the (Table 3), (this example 1) and (this example 2) indicate composition elements of the audio solder alloys according to this invention and their contained amounts (% by mass (Wt %). The auditory assessment values are dependent variables, namely, measured values and the explanatory variables are the contained amounts of Ag, Cu, In, Ni and Pb (amounts of their additions). (Table 4) and (Table 5) indicate results of the multiple correlation analysis of the audio solder alloys containing their contained amounts.

[Table 4]

| SUMMARY | |
| --- | --- |
| REGRESSION STATISTICS | |
| MULTIPLE CORRELATION R | 0.981433294 |
| MULTIPLE DETERMINATION R2 | 0.963211311 |
| CORRECTION R2 | 0.901896828 |
| STANDARD ERROR | 0.196582672 |
| OBSERVED FREQUENCY | 9 |

[Table 5] :-

TABLE OF ANALYSIS OF VARIANCE

|  | DEGREE OF FREEDOM | VARIATION | VARIANCE | OBSERVED VARIANCE RATIO | SIGNIFICANT F |
|---|---|---|---|---|---|
| REGRESSION | 5 | 3.035421315 | 0.6070843 | 15.70936056 | 0.0231169979 |
| RESIDUAL | 3 | 0.115934241 | 0.0386447 |  |  |
| TOTAL | 8 | 3.151355556 |  |  |  |

|  | COEFFICIENT | STANDARD ERROR | t | P-VALUE | LOWER BOUND, 95% | UPPER BOUND, 95% | LOWER BOUND, 95% | UPPER BOUND, 95% |
|---|---|---|---|---|---|---|---|---|
| INTERCEPT | 3.63863756 | 0.434739723 | 8.3696919 | 0.003576532 | 2.255101735 | 5.022173385 | 2.255101735 | 5.022173385 |
| Ag | 0.11048792 | 0.081812703 | 1.3504983 | 0.269697507 | -0.149876613 | 0.370852453 | -0.149876613 | 0.370852453 |
| Cu | 0.072138465 | 0.188893804 | 0.3818996 | 0.727981931 | -0.529005924 | 0.673282854 | -0.529005924 | 0.673282854 |
| Zn | 376.9303504 | 134.5321205 | 2.801787 | 0.067752378 | -51.21089948 | 805.0716003 | -51.21089948 | 805.0716003 |
| Ni | 4.65124922 | 22.53562479 | 0.2063954 | 0.849695835 | -67.067716662 | 76.36966506 | -67.067716662 | 76.36966506 |
| Pb | -45.7281429 | 8.463893494 | -5.402731 | 0.012430905 | -72.66402948 | -18.79225633 | -72.66402948 | -18.79225633 |

Based on (Table 3) and (Table 5), the multiple correlation equation in this case is as follows. A predictive value is estimated as y.

$$y=0.1104879Ag+0.072135Cu+376.93035In+4.651292Ni-45.72814Pb+3.6386376\ldots(1)$$

Here, since the multiple correlation coefficient of Pb indicates minus, it is said that an amount of addition of Pb is preferably as small as possible. Pb is contained in high-purity Sn so that a trace of In and/or Ni is added to order to prevent Pb from having impact thereon as much as possible.

As shown in (Table 4), since a multiple correlation coefficient R between the predictive value y by the multiple correlation equation and actual auditory assessment value Y is [0.9814333], this is closely near (1.0) so that it is understood that they have very strong correlation.

Since the multiple determination R2 (coefficient of determination: R square) is [0.9632113] and the correction R2 (adjusted R square of coefficient of determination R2) is [0.9018968], it is understood that fitting ratio (fitting accuracy) of this multiple correlation equation y is very good.

Further, since, in the table of analysis of variance shown in (Table 5), the significant F is [0.023169979], the correlation occurs with a probability of 97.7% (=100%-2.3%) so that it is said that reliability of the multiple correlation equation y, which is calculated from the multiple correlation coefficients shown in (Table 3) and (Table 5), is considerably high.

Therefore, it is said that the auditory assessment value Y, [5.0], which is maximum assessment value, of each of the audio solder alloys of the (this example 1) and (this example 2) shown in (Table 3) is very reliable assessment value. Thus, it is understood that combination of composition elements of the audio solder alloys shown in (this example 1) and (this example 2) and their contained amounts (amounts of addition) are suitable for the joining solder which allows high sound quality and high auditory assessment value to be obtained.

In (Table 3), as preferable examples of the suitable audio solder alloys, the audio solder alloys shown within a range of (this example 1) and (this example 2) have been illustrated.

The contained amounts in this audio solder alloys are (Sn·Ag (of 1.0 through 1.01 % by mass)·Cu (of 0.71 through 0.72 % by mass) • In (of 0.003 through 0.0037 % by mass) • Ni (of 0.016 through 0.017 % by mass) • Pb (of 0.0025 through 0.0035 % by mass).

The contained amounts in the audio solder alloys according to this invention are not limited thereto: They can be extended to the following region.

(Region of Contained Amounts in Audio Solder Alloys according to This Invention)

(Sn (remainder)•Ag (of 0.8 through 1.20)•Cu (of 0.65 through 0.75) • In (of 0.002 through 0.004) • Ni (of 0.01 through 0.02) • Pb (=< 0.005)).

On the other hand, (Table 3) indicates the auditory assessment values of items of the data 1 through the data 7 indicated as the comparison examples. Similarly, (Table 4) and (Table 5) indicate the results of the multiple correlation analysis on the auditory time when the contained amounts are changed in each of the same composition elements.

In (Table 3), when their contained amounts are set like those of the data 1 through the data 7, the auditory assessment values indicate their highest value of only (4.35) even if the audio solder alloy uses the same composition metals and it is understood that they are inferior to (this example 1) and (this example 2) as the audio solder alloy.

(Table 6) through (Table 8) classified to Group 1 will indicate the cases in which the audio solder alloys have the same composition elements but their contained amounts are changed.

The data 1 through the data 6 of (Table 6) are quite identical to the data 1 through the data 6 of the above-mentioned (Table 3) and the data 8 through the data 10 of (Table 6) are newly added thereto. Since the data 7 of (Table 3) is the referenced solder as described above, it is omitted from the assessment of (Table 6).

(Table 6) indicates the auditory assessment values Y (dependent variables as the measured values) and the explanatory variables of the data 1 through the data 6 and the data 8 through the data 10. (Table 7) and (Table 8) indicate results of the multiple correlation analysis.

[Table 6]

|  | Y | Cu | Ag | In | Ni | Pb | NW |
|---|---|---|---|---|---|---|---|
| DATA 1 | 4.00 | 0.7000 | 3.4900 | 0.0000 | 0.0001 | 0.0042 | $NWO_3$ |
| DATA 2 | 4.15 | 1.9800 | 0.2700 | 0.0025 | 0.0007 | 0.0130 | $NWO_4$ |

(continued)

|  | Y | Cu | Ag | In | Ni | Pb | NW |
|---|---|---|---|---|---|---|---|
| DATA 3 | 4.35 | 1.9700 | 0.2700 | 0.0029 | 0.0007 | 0.0130 | $NWO_5$ |
| DATA 4 | 4.18 | 1.6700 | 4.7000 | 0.0000 | 0.0001 | 0.0002 | $NWO_6$ |
| DATA 5 | 3.83 | 0.8800 | 3.9800 | 0.0022 | 0.0077 | 0.0290 | $NWO_7$ |
| DATA 6 | 3.68 | 0.5200 | 2.9900 | 0.0023 | 0.0022 | 0.0250 | $NWO_8$ |
| DATA 8 | 4.33 | 0.6900 | 0.0048 | 0.0025 | 0.0490 | 0.0320 | $NWO_{10}$ |
| DATA 9 | 4.03 | 0.7200 | 0.0120 | 0.0026 | 0.0010 | 0.0170 | $NWO_{11}$ |
| DATA 10 | 3.78 | 0.7000 | 0.0042 | 0.0016 | 0.0340 | 0.0250 | $NWO_{12}$ |
| Y = AUDITORY ASSESSMENT VALUE | | | | | | | |

[Table 7]

| SUMMARY | |
|---|---|
| REGRESSION STATISCTICS | |
| MULTIPLE CORRELATION R | 0.95190782 |
| MULTIPLE DETERMINATION R2 | 0.9061285 |
| CORRECTION R2 | 0.74967601 |
| STANDARD ERROR | 0.11929342 |
| OBSERVED FREQUENCY | 9 |

[Table 8]

| TABLE OF ANALYSIS OF VARIANCE | | | | | | | | |
|---|---|---|---|---|---|---|---|---|
| | DEGREE OF FREEDOM | VARIATION | VARIANCE | OBSERVED VARIANCE RATIO | SIGNIFICANT F | | | |
| REGRESSION | 5 | 0.412101243 | 0.082421449 | 5.791716488 | 0.089541617 | | | |
| RESIDUAL | 3 | 0.042692757 | 0.014230919 | | | | | |
| TOTAL | 8 | 0.4548 | | | | | | |
| | | | | | | | | |
| | COEFFICIENT | STANDARD ERROR | t | P-VALUE | LOWER BOUND, 95% | UPPER BOUND, 95% | LOWER BOUND. 95.0% | UPPER BOUND, 95.0% |
| INTERCEPT | 3.751029086 | 0.202480038 | 18.52542664 | 0.000343265 | 3.106647237 | 4.395410934 | 3.106647237 | 4.395410934 |
| Cu | -0.097330449 | 0.142818471 | -0.681497626 | 0.54445154 | -0.551842564 | 0.357181666 | -0.551842564 | 0.357181666 |
| Ag | 0.142661943 | 0.060418387 | 2.361233895 | 0.099288844 | -0.049616329 | 0.334940214 | -0.049616329 | 0.334940214 |
| In | 547.1877181 | 180.8848859 | 3.025060471 | 0.056531793 | -28.46871856 | 1122.844155 | -28.46871856 | 1122.844155 |
| Ni | 27.44481571 | 1.489698162 | 3.664342022 | 0.035138447 | 3.609253467 | 51.28037795 | 3.609253467 | 51.28037795 |
| Pb | -65.7802265 | 19.5597036 | -3.363048227 | 0.043634699 | -128.0279329 | -3.53252007 | -128.0279329 | -3.53252007 |

It is understood from the results of the multiple correlation analysis that the results have been considerably different to each other if the same composition elements are contained but their contained amounts are changed, a detailed explanation of which will be omitted.

By the way, values the multiple correlation R thereof and the coefficient of determination R2 thereof are good but values of the adjusted R square of coefficient of determination R2 (correction R2) thereof and the significant F thereof are no good so that the predictive value y and the auditory assessment value Y are not sufficiently correlated and the auditory assessment value Y has its maximum value of only (4.33). Therefore, it is not said that they are the optimal audio solder alloy.

It is to be noted that the audio solder alloys having the same composition elements are used as the joining solder for 12 filter circuits NW ($NW0_1$ through $NW0_{12}$) so that the audio solder alloy having the contained amounts shown in (this example 1) is used for the filter circuit $NW0_1$ and the audio solder alloy having the contained amounts shown in (this example 2) is used for the filter circuit $NW0_2$. Similarly, in the filter circuits $NW0_3$ through $NW0_{12}$, the audio solder alloys shown in the data 1 through the data 10 are used and the sound quality thereof and the auditory thereof are assessed.

(9) Auditory Assessments of Other Grouped Audio Solder Alloys which fall outside of the scope of the invention.

The following audio solder alloys of groups 2 through 5 will indicate items of the data, all of which indicate that the auditory assessments like (this example 1) and (this example 2) cannot be acquired.

The following will show the result thereof.

(B) Audio Solder Alloys of Group 2

Composition of the audio solder alloys of this group is the one in which Pb and Sb are common added metals and, as shown in (Table 1), "Audio solder alloy of group 2: Any one of (Bi, Fe, As, In and Ni) is added into (Sn•Ag•Cu•Sb•Pb)". Therefore, there are 5 species of audio solder alloys.

The corresponding tables indicating the results of the multiple correlation analysis when using these audio solder alloys are (Table 9 through Table 23).

(1) (Table 9 through Table 11): The results of analysis of the audio solder alloy made of (Sn•Ag•Cu•Sb•Bi•Pb);

(2) (Table 12 through Table 14): The results of analysis of the audio solder alloy made of (Sn•Ag•Cu•Sb•Fe•Pb);

(3) (Table 15 through Table 17): The results of analysis of the audio solder alloy made of (Sn•Ag•Cu•Sb•As•Pb);

(4) (Table 18 through Table 20): The results of analysis of the audio solder alloy made of (Sn·Ag·Cu·Sb·In·Pb) ; and

(5) (Table 21 through Table 23): The results of analysis of the audio solder alloy made of (Sn•Ag•Cu•Sb•Ni•Pb).

(a) The following will indicate the results of analysis of the audio solder alloy made of (Sn•Ag•Cu•Sb•Bi•Pb): (Table 9 through Table 11).

[Table 9]

|  | Y | Cu | Ag | Sb | Bi | Pb | NW |
|---|---|---|---|---|---|---|---|
| DATA 1 | 4.33 | 0.6900 | 0.0048 | 0.0045 | 0.0026 | 0.0320 | $NW2_1$ |
| DATA 2 | 4.00 | 0.7000 | 3.4900 | 0.0006 | 0.0021 | 0.0042 | $NW2_2$ |
| DATA 3 | 4.15 | 1.9800 | 0.2700 | 0.0076 | 0.0020 | 0.0130 | $NW2_3$ |
| DATA 4 | 4.35 | 1.9700 | 0.2700 | 0.0068 | 0.0022 | 0.0130 | $NW2_4$ |
| DATA 5 | 4.18 | 1.6700 | 4.7000 | 0.0160 | 0.0057 | 0.0002 | NW25 |
| DATA 6 | 4.03 | 0.7200 | 0.0120 | 0.0050 | 0.0022 | 0.0170 | $NW2_6$ |
| DATA 7 | 3.83 | 0.8800 | 3.9800 | 0.0063 | 0.0018 | 0.0290 | $NW2_7$ |
| DATA 8 | 3.78 | 0.7000 | 0.0042 | 0.0031 | 0.0021 | 0.0250 | $NW2_8$ |

(continued)

|  | Y | Cu | Ag | Sb | Bi | Pb | NW |
|---|---|---|---|---|---|---|---|
| DATA 9 | 3.68 | 0.5200 | 2.9900 | 0.0150 | 0.0080 | 0.0250 | $NW2_9$ |
| Y = AUDITORY ASSESSMENT VALUE | | | | | | | |

[Table 10]

| SUMMARY | |
|---|---|
| REGRESSION STATISTICS | |
| MULTIPLE CORRELATION R | 0.701375 |
| MULTIPLE DETERMINATION R2 | 0.491927 |
| CORRECTION R2 | -0.35486 |
| STANDARD ERROR | 0.277532 |
| OBSERVED FREQUENCY | 9 |

[Table 11]

| TABLE OF ANALYSIS OF VARIANCE | | | | | |
|---|---|---|---|---|---|
| | DEGREE OF FREEDOM | VARIATION | VARIANCE | OBSERVED VARIANCE RATIO | SIGNIFICANT F |
| REGRESSION | 5 | 0.223728426 | 0.04474569 | 0.580932794 | 0.722401959 |
| RESIDUAL | 3 | 0.231071574 | 0.07702386 | | |
| TOTAL | 8 | 0.4548 | | | |

| | COEFFICIENT | STANDARD ERROR | t | P-VALUE | LOWERBOUND. 95% | UPPER BOUND, 95% | LOWER BOUND, 95.0% | UPPER BOUND, 95.0% |
|---|---|---|---|---|---|---|---|---|
| INTERCEPT | 3.958067899 | 0.701294227 | 5.64394765 | 0.011007654 | 1.726236679 | 6.189899118 | 1.726236619 | 6.189899118 |
| Cu | 0.219793095 | 0.396367078 | 0.55451905 | 0.617882749 | -1.041623848 | 1.481210039 | -1.041623848 | 1.481210039 |
| Ag | -0.030858379 | 0.0710587 | -0.434266 | 0.693433006 | -0.256998877 | 0.195282118 | -0.256998877 | 0.195282118 |
| Sb | -5.751897216 | 72.85352207 | -0.0789515 | 0.942042561 | -237.6043193 | 226.1005249 | -237.6043193 | 226.1005249 |
| Bi | -3.834340232 | 158.7625802 | -0.0241514 | 0.982248474 | -509.087727 | 501.4190466 | -509.087727 | 501.4190466 |
| Pb | -3.060031169 | 14.36288123 | -0.2130513 | 0.844943398 | -48.76912947 | 42.64906713 | -48.76912947 | 42.64906713 |

As being made clear from (Table 9) through (Table 11), it is difficult to say that they are the optimal audio solder alloys.
(b) The following will indicate the results of analysis of the audio solder alloy made of (Sn•Ag•Cu•Sb•Fe•Pb): (Table 12 through Table 14).

[Table 12]

|  | Y | Cu | Ag | Sb | Fe | Pb | NW |
|---|---|---|---|---|---|---|---|
| DATA 1 | 4.33 | 0.6900 | 0.0048 | 0.0045 | 0.0030 | 0.0320 | $NW3_1$ |
| DATA 2 | 4.00 | 0.7000 | 3.4900 | 0.0006 | 0.0064 | 0.0042 | $NW3_2$ |
| DATA 3 | 4.15 | 1.9800 | 0.2700 | 0.0076 | 0.0090 | 0.0130 | $NW3_3$ |
| DATA 4 | 4.35 | 1.9700 | 0.2700 | 0.0068 | 0.0057 | 0.0130 | $NW3_4$ |
| DATA 5 | 4.18 | 1.6700 | 4.7000 | 0.0160 | 0.0013 | 0.0002 | $NW3_5$ |
| DATA 6 | 4.03 | 0.7200 | 0.0120 | 0.0050 | 0.0036 | 0.0170 | $NW3_6$ |
| DATA 7 | 3.83 | 0.8800 | 3.9800 | 0.0063 | 0.0120 | 0.0290 | $NW3_7$ |
| DATA 8 | 3.78 | 0.7000 | 0.0042 | 0.0031 | 0.0001 | 0.0250 | $NW3_8$ |
| DATA 9 | 3.68 | 0.5200 | 2.9900 | 0.0150 | 0.0034 | 0.0250 | $NW3_9$ |
| Y = AUDITORY ASSESSMENT VALUE | | | | | | | |

[Table 13]

| SUMMARY | |
|---|---|
| REGRESSION STATISTICS | |
| MULTIPLE CORRELATION R | 0.72336 |
| MULPTILE DETERMINATION R2 | 0.523249 |
| CORRECTION R2 | -0.27134 |
| STANDARD ERROR | 0.268841 |
| OBSERVED FREQUENCY | 9 |

[Table 14]

TABLE OF ANALYSIS OF VARIANCE

| | DEGREE OF FREEDOM | VARIATION | VARIANCE | OBSERVED VARIANCE RATIO | SIGNIFICANT F |
|---|---|---|---|---|---|
| REGRESSION | 5 | 0.237973791 | 0.047594758 | 0.658519442 | 0.681927452 |
| RESIDUAL | 3 | 0.216826209 | 0.072275403 | | |
| TOTAL | 8 | 0.4548 | | | |

| | COEFFICIENT | STANDARD ERROR | t | P-VALUE | LOWER BOUND, | UPPER BOUND. 95% | LOWER BOUND, 95.0% | UPPER BOUND, 95.0% |
|---|---|---|---|---|---|---|---|---|
| INTERCEPT | 3.862092149 | 0.478814033 | 8.065954389 | 0.003980884 | 2.3382922 | 5.385892099 | 2.3382922 | 5.385892099 |
| Cu | 0.325760224 | 0.311802544 | 1.044764482 | 0.372903358 | -0.666534632 | 1.318055079 | -0.666534632 | 1.318055079 |
| Ag | -0.001247252 | 0.092252081 | -0.013520038 | 0.990061754 | -0.294834545 | 0.292340042 | -0.294834545 | 0.292340042 |
| Sb | -16.56819522 | 30.89852322 | -0.536213174 | 0.62902132 | -114.9010863 | 81.76469582 | -114.9010863 | 81.76469582 |
| Fe | -17.54621944 | 39.46010712 | -0.444657167 | 0.6866905 | -143.1258915 | 108.0334526 | -143.1258915 | 108.0334526 |
| Pb | 1.544433928 | 15.56468153 | 0.099226825 | 0.927216973 | -47.9893293 | 51.07819715 | -47.9893293 | 51.07819715 |

As being made clear from (Table 12) through (Table 14), it is difficult to say that they are the optimal audio solder alloys.
(c) The following will indicate the results of analysis of the audio solder alloy made of (Sn•Ag•Cu•Sb•As•Pb): (Table 15 through Table 17).

[Table 15]

|  | Y | Cu | Ag | Sb | As | Pb | NW |
|---|---|---|---|---|---|---|---|
| DATA 1 | 4.33 | 0.6900 | 0.0048 | 0.0045 | 0.0078 | 0.0320 | $NW4_1$ |
| DATA 2 | 4.00 | 0.7000 | 3.4900 | 0.0006 | 0.0003 | 0.0042 | $NW4_2$ |
| DATA 3 | 4.15 | 1.9800 | 0.2700 | 0.0076 | 0.0012 | 0.0130 | $NW4_3$ |
| DATA 4 | 4.35 | 1.9700 | 0.2700 | 0.0068 | 0.0013 | 0.0130 | $NW4_4$ |
| DATA 5 | 4.18 | 1.6700 | 4.7000 | 0.0160 | 0.0003 | 0.0002 | $NW4_5$ |
| DATA 6 | 4.03 | 0.7200 | 0.0120 | 0.0050 | 0.0097 | 0.0170 | $NW4_6$ |
| DATA 7 | 3.83 | 0.8800 | 3.9800 | 0.0063 | 0.0013 | 0.0290 | $NW4_7$ |
| DATA 8 | 3.78 | 0.7000 | 0.0042 | 0.0031 | 0.0035 | 0.0250 | $NW4_8$ |
| DATA 9 | 3.68 | 0.5200 | 2.9900 | 0.0150 | 0.0130 | 0.0250 | $NW4_9$ |
| Y = AUDITORY ASSESSMENT VALUE | | | | | | | |

[Table 16]

| SUMMARY | |
|---|---|
| REGRESSION STATISTICS | |
| MULTIPLE CORRELATION R | 0.717832 |
| MULTIPLE DETERMINATION R2 | 0.515283 |
| CORRECTION R2 | -0.29258 |
| STANDARD ERROR | 0.271078 |
| OBSERVED FREQUENCY | 9 |

[Table 17]

| TABLE OF ANALYSIS OF VARIANCE | | | | | |
|---|---|---|---|---|---|
| | DEGREE OF FREEDOM | VARIATION | VARIANCE | OBSERVED VARIANCE RATIO | SIGNIFICANT F |
| REGRESSION | 5 | 0.234350822 | 0.046870164 | 0.637836323 | 0.692453051 |
| RESIDUAL | 3 | 0.220449178 | 0.073483059 | | |
| TOTAL | 8 | 0.4548 | | | |

| | COEFFICIENT | STANDARD ERROR | t | P-VALUE | LOWER BOUND, 95% | UPPER BOUND. 95% | LOWER BOUND, 95.0% | UPPER BOUND, 95.0% |
|---|---|---|---|---|---|---|---|---|
| INTERCEPT | 3.702606422 | 0.776490171 | 4.768388009 | 0.017520173 | 1.231468146 | 6.173744699 | 1.231468146 | 6.173744699 |
| Cu | 0.397470694 | 0.498027561 | 0.798089753 | .0.4831536 | -1.187475279 | 1.982416666 | -1.187475279 | 1.982416666 |
| Ag | 0.010312241 | 0.125198746 | 0.082366967 | 0.939542714 | -0.388126045 | 0.408750526 | -0.388126045 | 0.408750526 |
| Sb | -24.81544715 | 51.24024493 | -0.484296041 | 0.661331582 | -187.8847759 | 138.2538804 | -187.8847759 | 138.2638804 |
| As | 23.56688404 | 61.85403615 | 0.381008023 | 0.72857809 | -173.2802648 | 220.4140328 | -173.2802648 | 220.4140328 |
| Pb | -2.254793241 | 12.17499536 | -0.185198694 | 0.864886566 | -41.00106225 | 36.49147577 | -41.00106225 | 36.49147577 |

As being made clear from (Table 15) through (Table 17), it is difficult to say that they are the optimal audio solder alloys.
(d) The following will indicate the results of analysis of the audio solder alloy made of (Sn•Ag•Cu•Sb•In•Pb): (Table 18 through Table 20).

[Table 18]

|  | Y | Cu | Ag | Sb | In | Pb | NW |
|---|---|---|---|---|---|---|---|
| DATA 1 | 4.33 | 0.6900 | 0.0048 | 0.0045 | 0.0025 | 0.0320 | $NW5_1$ |
| DATA 2 | 4.00 | 0.7000 | 3.4900 | 0.0006 | 0.0000 | 0.0042 | $NW5_2$ |
| DATA 3 | 4.15 | 1.9800 | 0.2700 | 0.0076 | 0.0025 | 0.0130 | $NW5_3$ |
| DATA 4 | 4.35 | 1.9700 | 0.2700 | 0.0068 | 0.0029 | 0.0130 | $NW5_4$ |
| DATA 5 | 4.18 | 1.6700 | 4.7000 | 0.0160 | 0.0000 | 0.0002 | $NW5_5$ |
| DATA 6 | 4.03 | 0.7200 | 0.0120 | 0.0050 | 0.0026 | 0.0170 | $NW5_6$ |
| DATA 7 | 3.83 | 0.8800 | 3.9800 | 0.0063 | 0.002 | 0.0290 | $NW5_7$ |
| DATA 8 | 3.78 | 0.7000 | 0.0042 | 0.0031 | 0.0016 | 0.0250 | $NW5_8$ |
| DATA 9 | 3.68 | 0.5200 | 2.9900 | 0.0150 | 0.0023 | 0.0250 | $NW5_9$ |
| Y = AUDITORY ASSESSMENT VALUE | | | | | | | |

[Table 19]

| SUMMARY | |
|---|---|
| REGRESSION STATISTICS | |
| MULTIPLE CORRELATION R | 0.704657 |
| MULTIPLE DETERMINATION R2 | 0.496541 |
| CORRECTION R2 | -0.34256 |
| STANDARD ERROR | 0.276269 |
| OBSERVED FREQUENCY | 9 |

[Table 20]

| TABLE OF ANALYSIS OF VARIANCE | | | | | |
|---|---|---|---|---|---|
| | DEGREE OF FREEDOM | VARIATION | VARIANCE | OBSERVED VARIANCE RATIO | SIGNIFICANT F |
| REGRESSION | 5 | 0.22582694 | 0.045165388 | 0.59175592 | 0.716595198 |
| RESIDUAL | 3 | 0.22897306 | 0.076324353 | | |
| TOTAL | 8 | 0.4548 | | | |

| | COEFFICIENT | STANDARD ERROR | t | P-VALUE | LOWER BOUND, 95% | UPPER BOUND, 95% | LOWER BOUND, 95.0% | UPPER BOUND. 95.0% |
|---|---|---|---|---|---|---|---|---|
| INTERCEPT | 3.94691883 | 0.453145327 | 8.71005083 | 0.00318548 | 2.504808159 | 5.389029501 | 2.504808159 | 5.389029501 |
| Cu | 0.249416923 | 0.261029131 | 0.955513747 | 0.409809226 | -0.58129427 | 1.080128115 | -0.58129427 | 1.080128115 |
| Ag | -0.038781383 | 0.08389479 | -0.462262118 | 0.675356143 | -0.305772049 | 0.228209282 | -0.305772049 | 0.228209282 |
| Sb | -6.209054802 | 24.74894649 | -0.25088158 | 0.818107439 | -84.97124811 | 72.55313851 | -84.97124811 | 72.55313851 |
| In Pb | -32.57040065 | 194.3564023 | -0.167580796 | 0.87757286 | -651.0992149 | 585.95841361 | -651.0992149 | 585.9584136 |
| | -0.572723382 | 18.4711536 | -0.031006368 | 0.977211926 | -59.35617789 | 58.21073113 | -59.356177891 | 58.21073113 |

EP 2 644 313 B1

As being made clear from (Table 18) through (Table 20), it is difficult to say that they are the optimal audio solder alloys.
(e) The following will indicate the results of analysis of the audio solder alloy made of (Sn•Ag•Cu•Sb•Ni•Pb): (Table 21 through Table 23).

[Table 21]

|        | Y    | Cu     | Ag     | Sb     | Ni     | Pb     | NW     |
|--------|------|--------|--------|--------|--------|--------|--------|
| DATA 1 | 4.33 | 0.6900 | 0.0048 | 0.0045 | 0.0490 | 0.0320 | $NW6_1$ |
| DATA 2 | 4.00 | 0.7000 | 3.4900 | 0.0006 | 0.0001 | 0.0042 | $NW6_2$ |
| DATA 3 | 4.15 | 1.9800 | 0.2700 | 0.0076 | 0.0007 | 0.0130 | $NW6_3$ |
| DATA 4 | 4.35 | 1.9700 | 0.2700 | 0.0068 | 0.0007 | 0.0130 | $NW6_4$ |
| DATA 5 | 4.18 | 1.6700 | 4.7000 | 0.0160 | 0.0001 | 0.0002 | $NW6_5$ |
| DATA 6 | 4.03 | 0.7200 | 0.0120 | 0.0050 | 0.0010 | 0.0170 | $NW6_6$ |
| DATA 7 | 3.83 | 0.8800 | 3.9800 | 0.0063 | 0.0077 | 0.0290 | $NW6_7$ |
| DATA 8 | 3.78 | 0.7000 | 0.0042 | 0.0031 | 0.0340 | 0.0250 | $NW6_8$ |
| DATA 9 | 3.68 | 0.5200 | 2.9900 | 0.0150 | 0.0022 | 0.0250 | $NW6_9$ |
| Y = AUDITORY ASSESSMENT VALUE | | | | | | | |

[Table 22]

| SUMMARY | |
|---|---|
| REGRESSION STATISTICS | |
| MULTIPLE CORRELATION R | 0.79071 |
| MULTIPLE DETERMINATION R2 | 0.625222 |
| CORRECTION R2 | 0.000591 |
| STANDARD ERROR | 0.238362 |
| OBSERVED FREQUENCY | 9 |

[Table 23]

| TABLE OF ANALYSIS OF VARIANCE | | | | | |
|---|---|---|---|---|---|
| | DEGREE OF FREEDOM | VARIATION | VARIANCE | OBSERVED VARIANCE RATIO | SIGNIFICANT F |
| REGRESSION | 5 | 0.284350867 | 0.056870173 | 1.000946832 | 0.5348034 |
| RESIDUAL | 3 | 0.170449133 | 0.056816378 | | |
| TOTAL | 8 | 0.4548 | | | |

| | COEFFICIENT | STANDARD ERROR | t | P-VALUE | LOWER BOUND, 95% | UPPER BOUND, 95% | LOWER BOUND, 95.0% | UPPER BOUND, 95.0% |
|---|---|---|---|---|---|---|---|---|
| INTERCEPT | 3.894568747 | 0.393923908 | 9.886601626 | 0.002200702 | 2.640927062 | 5.148210432 | 2.640927062 | 5.148210432 |
| Cu | 0.253918089 | 0.19695216 | 1.289233465 | 0.287725238 | -0.372873494 | 0.880709672 | -0.372873494 | 0.880109672 |
| Ag | -0.016555698 | 0.059251008 | -027941631 | 0.798081799 | -0.20511885 | 0.172007455 | -0.20511885 | 0.172007455 |
| Sb | -4.306320212 | 20.65089523 | -0.20852947 | 0.848171129 | -10.0266855 | 61.41404495 | -70.0266855 | 61.41404495 |
| Ni | 6.938791872 | 6.714954181 | 1.03333421 | 0.377447058 | -14.431189251 | 28.30877299 | -14.43118925 | 28.30877299 |
| Pb | -8.459822294 | 11.90110308 | -0.71084354 | 0.528462678 | -46.33444382 | 29.41479923 | -46.33444382 | 29.41419923 |

As being made clear from (Table 21) through (Table 23), it is difficult to say that they are the optimal audio solder alloys.

(C) Auditory Assessments of Audio Solder Alloys of Group 3 which fall outside of the scope of the invention

Composition of the audio solder alloys of this group is the one in which Pb and Bi are common added metals to ((Sn•Ag•Cu) and "Audio solder alloy of group 3: Any one of (Fe, As, In and Ni) is added into (Sn•Ag•Cu•Bi•Pb)". Therefore, there are 4 species of audio solder alloys.
The corresponding tables indicating the results of the multiple correlation analysis when using these audio solder alloys are (Table 24 through Table 35).

(1) (Table 24 through Table 26): The results of analysis of the audio solder alloy made of (Sn•Ag•Cu•Bi•Fe•Pb);

(2) (Table 27 through Table 29): The results of analysis of the audio solder alloy made of (Sn•Ag•Cu•Bi•As•Pb);

(3) (Table 30 through Table 32): The results of analysis of the audio solder alloy made of (Sn•Ag•Cu•Bi•In•Pb); and

(4) (Table 33 through Table 35): The results of analysis of the audio solder alloy made of (Sn•Ag•Cu•Bi•Ni•Pb).

(a) The following will indicate the results of analysis of the audio solder alloy made of (Sn•Ag•Cu•Bi•Fe•Pb): (Table 24 through Table 26).

[Table 24]

|  | Y | Cu | Ag | Bi | Fe | Pb | NW |
|---|---|---|---|---|---|---|---|
| DATA 1 | 4.33 | 0.6900 | 0.0048 | 0.0026 | 0.0030 | 0.0320 | $NW7_1$ |
| DATA 2 | 4.00 | 0.7000 | 3.4900 | 0.0021 | 0.0064 | 0.0042 | $NW7_2$ |
| DATA 3 | 4.15 | 1.9800 | 0.2700 | 0.0020 | 0.0090 | 0.0130 | $NW7_3$ |
| DATA 4 | 4.35 | 1.9700 | 0.2700 | 0.0022 | 0.0057 | 0.0130 | $NW7_4$ |
| DATA 5 | 4.18 | 1.6700 | 4.7000 | 0.0057 | 0.0013 | 0.0002 | $NW7_5$ |
| DATA 6 | 4.03 | 0.7200 | 0.0120 | 0.0022 | 0.0036 | 0.0170 | $NW7_6$ |
| DATA 7 | 3.83 | 0.8800 | 3.9800 | 0.0018 | 0.0120 | 0.0290 | $NW7_7$ |
| DATA 8 | 3.78 | 0.7000 | 0.0042 | 0.0021 | 0.0001 | 0.0250 | $NW7_8$ |
| DATA 9 | 3.68 | 0.5200 | 2.9900 | 0.0080 | 0.0034 | 0.0250 | $NW7_9$ |
| Y = AUDITORY ASSESSMENT VALUE | | | | | | | |

[Table 25]

| SUMMARY | |
|---|---|
| REGRESSION STATISTICS | |
| MULTIPLE CORRELATION R | 0.720256 |
| MULTIPLE DETERMINATION R2 | 0.518769 |
| CORRECTION R2 | -028328 |
| STANDARD ERROR | 0.270101 |
| OBSERVED FREQUENCY | 9 |

[Table 26]

| TABLE OF ANALYSIS OF VARIANCE | | | | | |
|---|---|---|---|---|---|
| | DEGREE OF FREEDOM | VARIATION | VARIANCE | OBSERVED VARIANCE RATIO | SIGNIFICANT F |
| REGRESSION | 5 | 0.235936014 | 0.0471872 | 0.646801746 | 0.687866766 |
| RESIDUAL | 3 | 0.218863986 | 0.0729547 | | |
| TOTAL | 8 | 0.4548 | | | |

| | COEFFICIENT | STANDARD ERROR | t | P-VALUE | LOWER BOUND, 95% | UPPER BOUND, 95% | LOWER BOUND 95.0% | UPPER BOUND, 95.0% |
|---|---|---|---|---|---|---|---|---|
| | 3.984314243 | 0.4570727 | 8.7170252 | 0.003178072 | 2.529704918 | 5.438923569 | 2.529704918 | 5.438923569 |
| INTERCEPT Cu | 0.244161115 | 0.234936321 | 1.0392651 | 0.375082845 | -0.503511111 | 0.99183334 | -0.503511111 | 0.99183334 |
| Ag | -0.010401791 | 0.08231119 | -0.126372 | 0.907431733 | -0.272352132 | 0.25154915 | -0.272352132 | 0.25154915 |
| Bi | -33.54719275 | 66.18641656 | -0.506868 | 0.647155073 | -244.1825096 | 177.0869241 | -244.1825096 | 177.0869241 |
| Fe | -16.17546652 | 38.78750183 | -0.411028 | 0.704702515 | -139.6146084 | 107.2636754 | -139.6146084 | 107.2636754 |
| Pb | -0.52257244 | 13.89523236 | -0.037608 | 0.972362821 | -44.74340334 | 43.69825845 | -44.74340334 | 43.69825845 |

As being made clear from (Table 24) through (Table 26), it is difficult to say that they are the optimal audio solder alloys.
(b) The following will indicate the results of analysis of the audio solder alloy made of (Sn•Ag•Cu•Bi•As•Pb): (Table 27 through Table 29).

[Table 27]

|  | Y | Cu | Ag | Bi | As | Pb | NW |
|---|---|---|---|---|---|---|---|
| DATA 1 | 4.33 | 0.6900 | 0.0048 | 0.0026 | 0.0078 | 0.0320 | $NW8_1$ |
| DATA 2 | 4.00 | 0.7000 | 3.4900 | 0.0021 | 0.0003 | 0.0042 | $NW8_2$ |
| DATA 3 | 4.15 | 1.9800 | 0.2700 | 0.0020 | 0.0012 | 0.0130 | $NW8_3$ |
| DATA 4 | 4.35 | 1.9700 | 0.2700 | 0.0022 | 0.0013 | 0.0130 | $NW8_4$ |
| DATA 5 | 4.18 | 1.6700 | 4.7000 | 0.0057 | 0.0003 | 0.0002 | $NW8_5$. |
| DATA 6 | 4.03 | 0.7200 | 0.0120 | 0.0022 | 0.0097 | 0.0170 | $NW8_6$ |
| DATA 7 | 3.83 | 0.8800 | 3.9800 | 0.0018 | 0.0013 | 0.0290 | $NW8_7$ |
| DATA 8 | 3.78 | 0.7000 | 0.0042 | 0.0021 | 0.0035 | 0.0250 | $NW8_8$ |
| DATA 9 | 3.68 | 0.5200 | 2.9900 | 0.0080 | 0.0130 | 0.0250 | $NW8_9$ |
| Y = AUDITORY ASSESSMENT VALUE | | | | | | | |

[Table 28]

| SUMMARY | |
|---|---|
| REGRESSION STATISTICS | |
| MULTIPLE CORRELATION R | 0.711746 |
| MULTIPLE DETERMINATION R2 | 0.506582 |
| CORRECTION R2 | -0.31578 |
| STANDARD ERROR | 0.2735 |
| OBSERVED FREQUENCY | 9 |

[Table 29]

| TABLE OF ANALYSIS OF VARIANCE | | | | | |
|---|---|---|---|---|---|
| | DEGREE OF FREEDOM | VARIATION | VARIANCE | OBSERVED VARIANCE RATIO | SIGNIFICANT F |
| REGRESSION | 5 | 0.230393673 | 0.0460787 | 0.616008495 | 0.703770702 |
| RESIDUAL | 3 | 0.224406327 | 0.0748021 | | |
| TOTAL | 8 | 0.4548 | | | |

| | COEFFICIENT | STANDARD ERROR | t | P-VALUE | LOWERBOUND, 95% | UPPER BOUND. 95% | LOWER BOUND, 95.0% | UPPER BOUND. 95.0% |
|---|---|---|---|---|---|---|---|---|
| INTERCEPT | 3.913730879 | 0.538068372 | 7.2736683 | 0.005363161 | 2.201357176 | 5.626104582 | 2.201357176 | 5.626104582 |
| Cu | 0.258714395 | 0.293812452 | 0.8805427 | 0.443400708 | -0.676327955 | 1.193756746 | -0.676327955 | 1.193756746 |
| Ag | -0.009057805 | 0.100309444 | -0.090299 | 0.933740998 | -0.328287225 | 0.310171616 | -0.328287225 | 0.310171616 |
| Bi | -42.93504698 | 101.9075613 | -0.421314 | 0.701890944 | -367.2503889 | 281.3802949 | -367.2503889 | 281.3802949 |
| As | 17.44700584 | 56.4502227 | 0.3090689 | 0.777490573 | -162.2027968 | 197.0968085 | -1622027968 | 197.0968085 |
| Pb | -4.621665739 | 12.16614892 | -0.319879 | 0.729333332 | -43.3397814 | 34.09644992 | -43.3397814 | 34.09644992 |

As being made clear from (Table 27) through (Table 29), it is difficult to say that they are the optimal audio solder alloys.
(c) The following will indicate the results of analysis of the audio solder alloy made of (Sn•Ag•Cu•Bi•In•Pb): (Table 30 through Table 32).

[Table 30]

|        | Y    | Cu     | Ag     | Bi     | In     | Pb     | NW      |
|--------|------|--------|--------|--------|--------|--------|---------|
| DATA 1 | 4.33 | 0.6900 | 0.0048 | 0.0026 | 0.0025 | 0.0320 | $NW9_1$ |
| DATA 2 | 4.00 | 0.7000 | 3.4900 | 0.0021 | 0.0000 | 0.0042 | $NW9_2$ |
| DATA 3 | 4.15 | 1.9800 | 0.2700 | 0.0020 | 0.0025 | 0.0130 | $NW9_3$ |
| DATA 4 | 4.35 | 1.9700 | 0.2700 | 0.0022 | 0.0029 | 0.0130 | $NW9_4$ |
| DATA 5 | 4.18 | 1.6700 | 4.7000 | 0.0057 | 0.0000 | 0.0002 | $NW9_5$ |
| DATA 6 | 4.03 | 0.7200 | 0.0120 | 0.0022 | 0.0026 | 0.0170 | $NW9_6$ |
| DATA 7 | 3.83 | 0.8800 | 3.9800 | 0.0018 | 0.0022 | 0.0290 | $NW9_7$ |
| DATA 8 | 3.78 | 0.7000 | 0.0042 | 0.0021 | 0.0016 | 0.0250 | $NW9_8$ |
| DATA 9 | 3.68 | 0.5200 | 2.9900 | 0.0080 | 0.0023 | 0.0250 | $NW9_9$ |
| Y = AUDITORY ASSESSMENT VALUE | | | | | | | |

[Table 31]

| SUMMARY | |
|---|---|
| REGRESSION STATISTICS | |
| MULTIPLE CORRELATION R | 0.704459 |
| MULTIPLE DETERMINATION R2 | 0.496263 |
| CORRECTION R2 | -0.3433 |
| STANDARD ERROR | 0.276345 |
| OBSERVED FREQUENCY | 9 |

[Table 32]

**TABLE OF ANALYSIS OF VARIANCE**

| | DEGREE OF FREEDOM | VARIATION | VARIANCE | OBSERVED VARIANCE RATIO | SIGNIFICANT F |
|---|---|---|---|---|---|
| REGRESSION | 5 | 0.225700373 | 0.045140075 | 0.591097532 | 0.71694697 |
| RESIDUAL | 3 | 0.229099627 | 0.076366542 | | |
| TOTAL | 8 | 0.4548 | | | |

| | COEFFICIENT | STANDARD ERROR | t | P-VALUE | LOWER BOUND, 95% | UPPER BOUND, 95% | LOWER BOUND, 95.0% | UPPER BOUND, 95.0% |
|---|---|---|---|---|---|---|---|---|
| INTERCEPT | 3.992375349 | 0.467787317 | 8.534595106 | 0.003379586 | 2.50366733 | 5.481083369 | 2.50366733 | 5.481083369 |
| Cu | 0.222015287 | 0.261104244 | 0.850293672 | 0.457639963 | -0.608934951 | 1.052965525 | -0.608934951 | 1.052965525 |
| Ag | -0.041825509 | 0.07757259 | -0.539178971 | 0.627207581 | -0.288696113 | 0.205045094 | -0.288696113 | 0.205045094 |
| Bi | -13.21947567 | 53.41499257 | -0.24748624 | 0.820503172 | -183.2098214 | 156.7708701 | -183.2098214 | 156.7708701 |
| In | -34.49229072 | 192.4897954 | -0.17919023 | 0.869207265 | -647.0807287 | 578.0961473 | -647.0807287 | 578.0961473 |
| Pb | -1.100243701 | 18.71788857 | -0.058780332 | 0.956823415 | -60.66891902 | 58.46843162 | -60.66891902 | 58.46843162 |

30

As being made clear from (Table 30) through (Table 32), it is difficult to say that they are the optimal audio solder alloys.
(d) The following will indicate the results of analysis of the audio solder alloy made of (Sn•Ag•Cu•Bi•Ni•Pb): (Table 33 through Table 35).

[Table 33]

|  | Y | Cu | Ag | Bi | Ni | Pb | NW |
|---|---|---|---|---|---|---|---|
| DATA 1 | 4.33 | 0.6900 | 0.0048 | 0.0026 | 0.0490 | 0.0320 | $NW1O_1$ |
| DATA 2 | 4.00 | 0.7000 | 3.4900 | 0.0021 | 0.0001 | 0.0042 | $NW1O_2$ |
| DATA 3 | 4.15 | 1.9800 | 0.2700 | 0.0020 | 0.0007 | 0.0130 | $NW1O_3$ |
| DATA 4 | 4.35 | 1.9700 | 0.2700 | 0.0022 | 0.0007 | 0.0130 | $NW1O_4$ |
| DATA 5 | 4.18 | 1.6700 | 4.7000 | 0.0057 | 0.0001 | 0.0002 | $NW1O_5$ |
| DATA 6 | 4.03 | 0.7200 | 0.0120 | 0.0022 | 0.0010 | 0.0170 | $NW1O_6$ |
| DATA 7 | 3.83 | 0.8800 | 3.9800 | 0.0018 | 0.0077 | 0.0290 | $NW1O_7$ |
| DATA 8 | 3.78 | 0.7000 | 0.0042 | 0.0021 | 0.0340 | 0.0250 | $NW1O_8$ |
| DATA 9 | 3.68 | 0.5200 | 2.9900 | 0.0080 | 0.0022 | 0.0250 | $NW1O_9$ |
| Y = AUDITORY ASSESSMENT VALUE | | | | | | | |

[Table 34]

| SUMMARY | |
|---|---|
| REGRESSION STATISTICS | |
| MULTIPLE CORRELATION R | 0.79152 |
| MULTIPLE DETERMINATION R2 | 0.626503 |
| CORRECTION R2 | 0.004009 |
| STANDARD ERROR | 0.237954 |
| OBSERVED FREQUENCY | 9 |

[Table 35]

| TABLE OF ANALYSIS OF VARIANCE | | | | | |
|---|---|---|---|---|---|
| | DEGREE OF FREEDOM | VARIATION | VARIANCE | OBSERVED VARIANCE RATIO | SIGNIFICANT F |
| REGRESSION | 5 | 0.284933692 | 0.056986738 | 1.006439812 | 4.532826786 |
| RESIDUAL | 3 | 0.169866308 | 0.056622103 | | |
| TOTAL | 8 | 0.4548 | | | |

| | COEFFICIENT | STANDARD ERROR | t | P-VALUE | LOWER BOUND, 95% | UPPER BOUND, 95% | LOWER BOUND, 95.0% | UPPER BOUND, 95.0% |
|---|---|---|---|---|---|---|---|---|
| INTERCEPT | 3.928790256 | 0.40707045 | 9.651376688 | 0.002361392 | 2.633310405 | 5.224270106 | 2.633310405 | 5.224270106 |
| Cu | 0.233650659 | 0.180818671 | 1.292182144 | 0.286829164 | -0.341795054 | 0.809096371 | -0.341795054 | 0.809096371 |
| Ag | -0.017677031 | 0.0556983 | -0.31737111 | 0.771767966 | -0.194933881 | 0.159579818 | -0.194933881 | 0.159579818 |
| Bi | -10.38835964 | 44.73463571 | -0.23222184 | 0.831305697 | -152.7539358 | 131.9772165 | -152.7539358 | 131.9772165 |
| Ni | 6.967044979 | 6.674987846 | 1.043753957 | 0.3733029261 | -14.27574543 | 28.20983539 | -14.27574543 | 28.20983639 |
| Pb | -8.934372075 | 11.41923688 | -0.7823966 | 0.491056928 | -45.27548029 | 27.40673614 | -45.27548029 | 27.40673614 |

As being made clear from (Table 33) through (Table 35), it is difficult to say that they are the optimal audio solder alloys.

(D) Auditory Assessments of Audio Solder Alloys of Group 4 which fall outside of the scope of the invention

Composition of the audio solder alloys of this group is the one in which Pb and Fe are common added metals to (Sn•Ag•Cu) and "Audio solder alloy of group 4: Any one of (As, In and Ni) is added into (Sn•Ag•Cu•Fe•Pb)". Therefore, there are 3 species of audio solder alloys.
The corresponding tables indicating the results of multiple correlation analysis when using these audio solder alloys are (Table 36 through Table 44).

(1) (Table 36 through Table 38): The results of analysis of the audio solder alloy made of (Sn•Ag•Cu•Fe•As•Pb);

(2) (Table 39 through Table 41): The results of analysis of the audio solder alloy made of (Sn•Ag•Cu•Fe•In•Pb); and

(3) (Table 42 through Table 44): The results of analysis of the audio solder alloy made of (Sn•Ag•Cu•Fe•Ni•Pb).

(a) The following will indicate the results of analysis of the audio solder alloy made of (Sn•Ag•Cu•Fe•As•Pb): (Table 36 through Table 38).

[Table 36]

|  | Y | Cu | Ag | Fe | As | Pb | NW |
|---|---|---|---|---|---|---|---|
| DATA 1 | 4.33 | 0.6900 | 0.0048 | 0.0030 | 0.0078 | 0.0320 | $NW11_1$ |
| DATA 2 | 4.00 | 0.7000 | 3.4900 | 0.0064 | 0.0003 | 0.0042 | $NW11_2$ |
| DATA 3 | 4.15 | 1.9800 | 0.2700 | 0.0090 | 0.0012 | 0.0130 | $NW11_3$ |
| DATA 4 | 4.35 | 1.9700 | 0.2700 | 0.0057 | 0.0013 | 0.0130 | $NW11_4$ |
| DATA 5 | 4.18 | 1.6700 | 4.7000 | 0.0013 | 0.0003 | 0.0002 | $NW11_5$ |
| DATA 6 | 4.03 | 0.7200 | 0.0120 | 0.0036 | 0.0097 | 0.0170 | $NW11_6$ |
| DATA 7 | 3.83 | 0.8800 | 3.9800 | 0.0120 | 0.0013 | 0.0290 | $NW11_7$ |
| DATA 8 | 3.78 | 0.7000 | 0.0042 | 0.0001 | 0.0035 | 0.0250 | $NW11_8$ |
| DATA 9 | 3.68 | 0.5200 | 2.9900 | 0.0034 | 0.0130 | 0.0250 | $NW11_9$ |
| Y = AUDITORY ASSESSMENT VALUE | | | | | | | |

[Table 37]

| SUMMARY | |
|---|---|
| REGRESSION STATISTICS | |
| MULTIPLE CORRELATION R | 0.693926 |
| MULTIPLE DETERMINATION R2 | 0.481533 |
| CORRECTION R2 | -0.38258 |
| STANDARD ERROR | 0.280356 |
| OBSERVED FREQUENCY | 9 |

[Table 38]

### TABLE OF ANALYSIS OF VARIANCE

|  | DEGREE OF FREEDOM | VARIATION | VARIANCE | OBSERVED VARIANCE RATIO | SIGNIFICANT F |
|---|---|---|---|---|---|
| REGRESSION | 5 | 0.219001381 | 0.043800276 | 0.557258686 | 0.735279628 |
| RESIDUAL | 3 | 0.235798619 | 0.07859954 | | |
| TOTAL | 8 | 0.4548 | | | |

|  | COEFFICIENT | STANDARD ERROR | t | P-VALUE | LOWER BOUND, 95% | UPPER BOUND, 95% | LOWER BOUND, 95.0% | UPPER BOUND, 95.0% |
|---|---|---|---|---|---|---|---|---|
| INTERCEPT | 3.984340657 | 0.521085175 | 7.646236835 | 0.004645279 | 2.326015068 | 5.642666245 | 2.326015068 | 5.642666245 |
| $Cu$ | 0.195187085 | 0.250745532 | 0.778426974 | 0.493073238 | -0.602797105 | 0.993171276 | -0.602797105 | 0.993171276 |
| $Ag$ | -0.040242104 | 0.0630699 | -0.638055614 | 0.56880506 | -0.240958676 | 0.160474468 | -0.240958676 | 0.160474468 |
| $Fe$ | -5.014308251 | 32.37509931 | -0.154881633 | 0.8861483 | -108.0463234 | 98.01770693 | -108.0463234 | 98.01770693 |
| $As$ | -4.641966497 | 30.60183149 | -0.151689173 | 0.889058759 | -102.030652 | 92.74671904 | -102.030652 | 92.74671904 |
| $P_b$ | -2.611872537 | 13.92098378 | -0.187621261 | 0.863146273 | -46.91465594 | 41.69091087 | -46.91465594 | 41.69091087 |

As being made clear from (Table 36) through (Table 38), it is difficult to say that they are the optimal audio solder alloys.
(b) The following will indicate the results of analysis of the audio solder alloy made of (Sn•Ag•Cu•Fe•In•Pb): (Table 39 through Table 41).

[Table 39]

|  | Y | Cu | Ag | Fe | In | Pb | NW |
|---|---|---|---|---|---|---|---|
| DATA 1 | 4.33 | 0.6900 | 0.0048 | 0.0030 | 0.0025 | 0.0320 | $NW12_1$ |
| DATA 2 | 4.00 | 0.7000 | 3.4900 | 0.0064 | 0.0000 | 0.0042 | $NW12_2$ |
| DATA 3 | 4.15 | 1.9800 | 0.2700 | 0.0090 | 0.0025 | 0.0130 | $NW12_3$ |
| DATA 4 | 4.35 | 1.9700 | 0.2700 | 0.0057 | 0.0029 | 0.0130 | $NW12_4$ |
| DATA 5 | 4.18 | 1.6700 | 4.7000 | 0.0013 | 0.0000 | 0.0002 | $NW12_5$ |
| DATA 6 | 4.03 | 0.7200 | 0.0120 | 0.0036 | 0.0026 | 0.0170 | $NW12_6$ |
| DATA 7 | 3.83 | 0.8800 | 3.9800 | 0.0120 | 0.0022 | 0.0290 | $NW12_7$ |
| DATA 8 | 3.78 | 0.7000 | 0.0042 | 0.0001 | 0.0016 | 0.0250 | $NW12_8$ |
| DATA 9 | 3.68 | 0.5200 | 2.9900 | 0.0034 | 0.0023 | 0.0250 | $NW12_9$ |
| Y = AUDITORY ASSESSMENT VALUE | | | | | | | |

[Table 40]

| SUMMARY | |
|---|---|
| REGRESSION STATISTICS | |
| MULTIPLE CORRELATION R | 0.697162 |
| MULTIPLE DETERMINATION R2 | 0.486034 |
| CORRECTION R2 | -0.37058 |
| STANDARD ERROR | 0.279137 |
| OBSERVED FREQUENCY | 9 |

[Table 41]

| TABLE OF ANALYSIS OF VARIANCE | | | | | | | | |
|---|---|---|---|---|---|---|---|---|
| | DEGREE OF FREEDOM | VARIATION | VARIANCE | OBSERVED VARIANCE RATIO | SIGNIFICANT F | | | |
| REGRESSION | 5 | 0.221048422 | 0.044209684 | 0.567393187 | 0.729737614 | | | |
| RESIDUAL | 3 | 0.233751578 | 0.071917193 | | | | | |
| TOTAL | 8 | 0.4548 | | | | | | |

| | COEFFICIENT | STANDARD ERROR | t | P-VALUE | LOWER BOUND, 95% | UPPER BOUND, 95% | LOWER BOUND, 95.0% | UPPER BOUND, 95% |
|---|---|---|---|---|---|---|---|---|
| INTERCEPT | 3.958618305 | 0.468759753 | 8.444876678 | 0.003484906 | 2.466815562 | 5.450421049 | 2.466815562 | 5.450421049 |
| Cu | 0.236527922 | 0.262604572 | 0.900699941 | 0.434132128 | -0.599197027 | 1.072252872 | -0.599197027 | 1.072252872 |
| Ag | -0.050493294 | 0.081164634 | -0.62210955 | 0.57794728 | -0.308795384 | 0.207808796 | -0.308795384 | 0.207808796 |
| Fe | -0.598901892 | 33.13401385 | -0.01807514 | 0.986713836 | -106.0461218 | 104.8483181 | -106.0461218 | 104.8483181 |
| In | -45.32357362 | 203.7490757 | -0.222448 | 0.838249178 | -693.7440667 | 603.0969194 | -693.7440667 | 603.0969194 |
| Pb | -0.314436158 | 18.63463213 | -0.01687375 | 0.987596802 | -59.61815231 | 58.98928 | -59.61815231 | 58.98928 |

As being made clear from (Table 39) through (Table 41), it is difficult to say that they are the optimal audio solder alloys.
(c) The following will indicate the results of analysis of the audio solder alloy made of (Sn•Ag•Cu•Fe•Ni•Pb): (Table 42 through Table 44).

[Table 42]

|  | Y | Cu | Ag | Fe | Ni | Pb | NW |
|---|---|---|---|---|---|---|---|
| DATA 1 | 4.33 | 0.6900 | 0.0048 | 0.0030 | 0.0490 | 0.0320 | $NW13_1$ |
| DATA 2 | 4.00 | 0.7000 | 3.4900 | 0.0064 | 0.0001 | 0.0042 | $NW13_2$ |
| DATA 3 | 4.15 | 1.9800 | 0.2700 | 0.0090 | 0.0007 | 0.0130 | $NW13_3$ |
| DATA 4 | 4.35 | 1.9700 | 0.2700 | 0.0057 | 0.0007 | 0.0130 | $NW13_4$ |
| DATA 5 | 4.18 | 1.6700 | 4.7000 | 0.0013 | 0.0001 | 0.0002 | $NW13_5$ |
| DATA 6 | 4.03 | 0.7200 | 0.0120 | 0.0036 | 0.0010 | 0.0170 | $NW13_6$ |
| DATA 7 | 3.83 | 0.8800 | 3.9800 | 0.0120 | 0.0077 | 0.0290 | $NW13_7$ |
| DATA 8 | 3.78 | 0.7000 | 0.0042 | 0.0001 | 0.0340 | 0.0250 | $NW13_8$ |
| DATA 9 | 3.68 | 0.5200 | 2.9900 | 0.0034 | 0.0022 | 0.0250 | $NW13_9$ |
| Y = AUDITORY ASSESSMENT VALUE | | | | | | | |

[Table 43]

| SUMMARY | |
|---|---|
| REGRESSION STATISTICS | |
| MULTIPLE CORRELATION R | 0.806915 |
| MULTIPLE DETERMINATION R2 | 0.651112 |
| CORRECTION R2 | 0.069633 |
| STANDARD ERROR | 0.229981 |
| OBSERVED FREQUENCY | 9 |

[Table 44]

TABLE OF ANALYSIS OF VARIANCE

| | DEGREE OF FREEDOM | VARIATION | VARIANCE | OBSERVED VARIANCE RATIO | SIGNIFICANT F |
|---|---|---|---|---|---|
| REGRESSION | 5 | 0.29612592 | 0.05922518 | 1.119751578 | 0.494314817 |
| RESIDUAL | 3 | 0.15867408 | 0.05289136 | | |
| TOTAL | 8 | 0.4548 | | | |

| | COEFFICIENT | STANDARD ERROR | t | P-VALUE | LOWER BOUND, 95% | UPPER BOUND, 95% | LOWER BUND, 95.0% | UPPER BOUND, 95.0% |
|---|---|---|---|---|---|---|---|---|
| INTERCEPT | 3.940037454 | 0.384960927 | 10.2349022 | 0.00198348 | 2.714919975 | 5.165154932 | 2.714919975 | 5.165154932 |
| Cu | 0.195944272 | 0.191531543 | 1.02303918 | 0.38158491 | -0.41359458 | 0.805483124 | -0.41359458 | 0.805483124 |
| Ag | -0.030218289 | 0.051701845 | -0.58444721 | 0.599951166 | -0.194756635 | 0.134320058 | -0.194756635 | 0.134320058 |
| Fe | 15.30211197 | 29.48506187 | 0.51897846 | 0.639630463 | -78.53251425 | 109.1367382 | -78.53251425 | 109.1367382 |
| Ni | 9.171129852 | 7.507332944 | 1.2216229 | 0.309089734 | -14.72055413 | 33.06281384 | -14.72055413 | 33.06281384 |
| Pb | -13.49870232 | 13.78533095 | -0.9792077 | 0.399689449 | -57.36977786 | 30.37237323 | -57.36977786 | 30.37237323 |

EP 2 644 313 B1

38

As being made clear from (Table 42) through (Table 44), it is difficult to say that they are the optimal audio solder alloys.

(E)Audio Solder Alloy of Group 5 which fall outside of the scope of the invention

Composition of the audio solder alloys of this group is the one in which Pb and As are common added metals to (Sn•Ag•Cu) and "Audio solder alloy of group 5: Any one of (In and Ni) is added into (Sn•Ag•Cu•As•Pb). Therefore, there are 2 species of audio solder alloys.

The corresponding tables indicating the results of multiple correlation analysis when using these audio solder alloys are (Table 45 through Table 50).

(1) (Table 45 through Table 47): The results of analysis of the audio solder alloy made of (Sn•Ag•Cu•As•In•Pb); and

(2) (Table 48 through Table 50): The results of analysis of the audio solder alloy made of (Sn•Ag•Cu•As•Ni•Pb).

(a) The following will indicate the results of analysis of the audio solder alloy made of (Sn•Ag•Cu•As•In•Pb): (Table 45 through Table 47).

[Table 45]

|  | Y | Cu | Ag | As | In | Pb | NW |
|---|---|---|---|---|---|---|---|
| DATA 1 | 4.33 | 0.6900 | 0.0048 | 0.0078 | 0.0025 | 0.0320 | $NW14_1$ |
| DATA 2 | 4.00 | 0.7000 | 3.4900 | 0.0003 | 0.0000 | 0.0042 | $NW14_2$ |
| DATA 3 | 4.15 | 1.9800 | 0.2700 | 0.0012 | 0.0025 | 0.0130 | $NW14_3$ |
| DATA 4 | 4.35 | 1.9700 | 0.2700 | 0.0013 | 0.0029 | 0.0130 | $NW14_4$ |
| DATA 5 | 4.18 | 1.6700 | 4.7000 | 0.0003 | 0.0000 | 0.0002 | $NW14_5$ |
| DATA 6 | 4.03 | 0.7200 | 0.0120 | 0.0097 | 0.0026 | 0.0170 | $NW14_6$ |
| DATA 7 | 3.83 | 0.8800 | 3.9800 | 0.0013 | 0.0022 | 0.0290 | $NW14_7$ |
| DATA 8 | 3.78 | 0.7000 | 0.0042 | 0.0035 | 0.0016 | 0.0250 | $NW14_8$ |
| DATA 9 | 3.68 | 0.5200 | 2.9900 | 0.0130 | 0.0023 | 0.0250 | $NW14_9$ |
| Y = AUDITORY ASSESSMENT VALUE | | | | | | | |

[Table 46]

| SUMMARY | |
|---|---|
| REGRESSION STATISTICS | |
| MULTIPLE CORRELATION R | 0.697697 |
| MULTIPLE DETERMINATION R2 | 0.486781 |
| CORRECTION R2 | -0.36858 |
| STANDARD ERROR | 0.278934 |
| OBSERVED FREQUENCY | 9 |

[Table 47]

| TABLE OF ANALYSIS OF VARIANCE | | | | | |
|---|---|---|---|---|---|
| | DEGREE OF FREEDOM | VARIATION | VARIANCE | OBSERVED VARIANCE RATIO | SIGNIFICANT F |
| REGRESSION | 5 | 0.221387933 | 0.044277587 | 0.56909123 | 0.728813311 |
| RESIDUAL | 3 | 0.233412067 | 0.077804022 | | |
| TOTAL | 8 | 0.4548 | | | |

| | COEEFICIENT | STANDARD ERROR | t | P-VALUE | LOWER BOUND, 95% | UPPER BOUND, 95% | LOWER BOUND, 95.0% | UPPER BOUND, 95.0% |
|---|---|---|---|---|---|---|---|---|
| INTERCEPT | 3.93808035 | 0.56148352 | 7.013706029 | 0.005952844 | 2.151189196 | 5.724971503 | 2.151189196 | 5.724971503 |
| Cu | 0.255383127 | 0.386765049 | 0.660305598 | 0.556230226 | -0.975475874 | 1.486242128 | -0.975475874 | 1.486242128 |
| Ag | -0.052000025 | 0.068909998 | -0.75460784 | 0.505317205 | -0.271302394 | 0.167302345 | -0.271302394 | 0.167302345 |
| As | 2.589113616 | 37.80285872 | 0.068489889 | 0.949705135 | -117.7164544 | 122.8946817 | -117.7164544 | 122.8946817 |
| In | -57.6269614 | 245.9291059 | -0.23432347 | 0.829815338 | -840.2831359 | 725.0292131 | -844.2831359 | 725.0292131 |
| Pb | 0.325370583 | 20.8453849 | 0.015608759 | 0.988526542 | -66.01394755 | 66.66468872 | -66.01394755 | 66.66468872 |

As being made clear from (Table 45) through (Table 47), it is difficult to say that they are the optimal audio solder alloys.
(b) The following will indicate the results of analysis of the audio solder alloy made of (Sn•Ag•Cu•As•Ni•Pb): (Table 48) through Table 50).

[Table 48]

|  | Y | Cu | Ag | As | Ni | Pb | NW |
|---|---|---|---|---|---|---|---|
| DATA 1 | 4.33 | 0.6900 | 0.0048 | 0.0078 | 0.0490 | 0.0320 | $NW15_1$ |
| DATA 2 | 4.00 | 0.7000 | 3.4900 | 0.0003 | 0.0001 | 0.0042 | $NW15_2$ |
| DATA 3 | 4.15 | 1.9800 | 0.2700 | 0.0012 | 0.0007 | 0.0130 | $NW15_3$ |
| DATA 4 | 4.35 | 1.9700 | 0.2700 | 0.0013 | 0.0007 | 0.0130 | $NW15_4$ |
| DATA 5 | 4.18 | 1.6700 | 4.7000 | 0.0003 | 0.0001 | 0.0002 | $NW15_5$ |
| DATA 6 | 4.03 | 0.7200 | 0.0120 | 0.0097 | 0.0010 | 0.0170 | $NW15_6$ |
| DATA 7 | 3.83 | 0.8800 | 3.9800 | 0.0013 | 0.0077 | 0.0290 | $NW15_7$ |
| DATA 8 | 3.78 | 0.7000 | 0.0042 | 0.0035 | 0.0340 | 0.0250 | $NW15_8$ |
| DATA 9 | 3.68 | 0.5200 | 2.9900 | 0.0130 | 0.0022 | 0.0250 | $NW15_9$ |
| Y = AUDITORY ASSESSMENT VALUE | | | | | | | |

[Table 49]

| SUMMARY | |
|---|---|
| REGRESSION STATISTICS | |
| MULTIPLE CORRELATION R | 0.798603 |
| MULTIPLE DETERMINATION R2 | 0.637767 |
| CORRECTION R2 | 0.034044 |
| STANDARD ERROR | 0.234339 |
| OBSERVED FREQUENCY | 9 |

[Table 50]

| TABLE OF ANALYSIS OF VARIANCE | | | | | | | | |
|---|---|---|---|---|---|---|---|---|
| | DEGREE OF FREEDOM | VARIATION | VARIANCE | OBSERVED VARIANCE RATIO | SIGNIFICANT F | | | |
| REGRESSION | 5 | 0.290056234 | 0.058011247 | | 0.515341233 | | | |
| RESIDUAL | 3 | 0.164743766 | | 1.056390442 | | | | |
| TOTAL | 8 | 0.4548 | 0.054914589 | | | | | |
| | | | | | | | | |
| | COEFFICIENT | STANDARD ERROR | t | P-VALUE | LOWER BOUND, 95% | UPPER BOUND, 95% | LOWER BOUND, 95.0% | UPPER BOUND, 95.0% |
| INTERCEPT | 3.80317667 | 0.463759539 | 8.200751356 | 0.00379435 | 2.327286838 | 5.279066502 | 2.327286838 | 5.279066502 |
| Cu | 0.287776042 | 0.224168696 | 1.307070658 | 0282349128 | -0.41289901 | 0.988451093 | -0.41289901 | 0.988451093 |
| Ag | -0.01341697 | 0.05598541 | -0.23965119 | 0.82604153 | -0.191587532 | 0.164753591 | -0.191587532 | 0.164753591 |
| As | 10.39398473 | 26.93738756 | 0.385857192 | 0.725338725 | -75.33280476 | 96.12077423 | -75.33280476 | 96.12077423 |
| Ni | 8.362627901 | 7.256092293 | 1.152497455 | 0.332618527 | -14.72949621 | 31.45475201 | -14.72949621 | 31.45475201 |
| Pb | -10.82235046 | 11.97987396 | -0.90337766 | 0.432914067 | -48.94765607 | 27.30295516 | -48.94765607 | 27.30295516 |

As being made clear from (Table 48) through (Table 50), it is difficult to say that they are the optimal audio solder alloys.

The above-mentioned groups 2 through 5 relate to sound quality and auditory assessments of the audio solder alloys which are obtained by adding any optional 2 species of metals among (Bi, Fe, As, In, Sb and Ni) excluding a pair of (In, Ni) into (Sn•Ag•Cu•Pb) and the senary audio solder alloys made of these combinations cannot obtain any excellent sound quality and high auditory assessment values as indicated in (Table 9) through (Table 50).

As described above, according to this invention, as the joining solder used for the filter circuit or the like, an electronic circuit of which is configured by soldering discrete parts on the printed circuit board (circuit board), the audio solder alloys which contain the senary solder alloy, (Sn•Ag•Cu•In•Ni•Pb), as shown in group 1 and have their appropriate contained amounts have been developed to acquire excellent sound quality and high auditory assessment.

The auditory assessment device 10 shown in FIG. 1 is one example, and a three-way auditory assessment device may perform the auditory assessment.

Although the flux cored solder has been used as the audio solder alloy, this invention is not limited thereto: Solder ball, solder paste or the like may be used. Configuration and shape thereof are not limited. Further, in the soldering method, any methods using a reflow furnace, a jet solder bath or the like may be used. Further, although the description has been performed using the discrete parts as electronics parts, chip typed electronics parts may be used.

Additionally, in the above-mentioned examples, as the solder for joining the electronics parts, it has been applied to the filter circuit, but the audio solder alloy according to the invention are applicable as the solder for connecting the electronics parts constituting whole of audio system, If so, further improved sound quality may be expected.

INDUSTRIAL APPLICABILITY

The audio solder alloy according to the invention is applicable for the joining solder which is used for soldering various kinds of electronics parts used for audio system on the printed circuit board (circuit board).

EXPLANATION OF REFERENCE NUMBERS

[0088]

10: auditory assessment device

20: sound source

30: output amplifier

NW0 through NW15: filter circuits

40: low pass filter

50: high pass filter

WF, TW: speakers

## Claims

1.  Audio solder alloy **characterized in that** the alloy consists of Ag of 0.8 through 1.20 % by mass, Cu of 0.65 through 0.75 % by mass, In of 0.002 through 0.004 % by mass, Ni of 0.01 through 0.02 % by mass, Pb of greater than 0% and not greater than 0.005 % by mass and the remainder of Sn.

2.  The audio solder alloy according to Claim 1, **characterized in that** the alloy consists of Ag of 1.0 through 1.01 % by mass, Cu of 0.71 through 0.72 % by mass, In of 0.003 through 0.0037 % by mass, Ni of 0.016 through 0.017 % by mass, Pb of 0.0025 through 0.0035 % by mass and the remainder of Sn.

## Patentansprüche

1.  Audiolotlegierung, **dadurch gekennzeichnet, dass** die Legierung aus 0,8 bis 1,20 Masseprozent Ag, 0,65 bis 0,75 Masseprozent Cu, 0,002 bis 0,004 Masseprozent In, 0,01 bis 0,02 Masseprozent Ni, Pb mehr als 0% und nicht mehr als 0,005 Masseprozent und der Rest Sn besteht.

2. Audiolotlegierung nach Anspruch 1, **dadurch gekennzeichnet, dass** die Legierung aus 1,0 bis 1,01 Masseprozent Ag, 0,71 bis 0,72 Masseprozent Cu, 0,003 bis 0,0037 Masseprozent In, 0,016 bis 0,017 Masseprozent Ni, 0,0025 bis 0,0035 Masseprozent Pb und der Rest Sn besteht.

**Revendications**

1. Alliage de brasage pour système audio **caractérisé en ce qu'**il est constitué de 0,8 à 1,20 % en masse d'Ag, de 0,65 à 0,75 % en masse de Cu, de 0,002 à 0,004 % en masse d'In, de 0,01 à 0,02 % en masse de Ni, d'une quantité supérieure à 0 % mais inférieure ou égale à 0,005 % en masse de Pb et de Sn pour le restant.

2. Alliage de brasage pour système audio selon la revendication 1, **caractérisé en ce qu'**il est constitué de 1,0 à 1,01 % en masse d'Ag, de 0,71 à 0,72 % en masse de Cu, de 0,003 à 0,0037 % en masse d'In, de 0,016 à 0,017 % en masse de Ni, de 0,0025 à 0,0035 % en masse de Pb et de Sn pour le restant.

FIG.1

**FIG.2**

**FIG.3**

**FIG.4**

FIG.5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H11277290 B
- JP 2002239780 A
- JP 2003230980 A
- JP 2005103645 A